# EUROPEAN PATENT SPECIFICATION

(11) **EP 3 827 108 B1**
(45) Date of publication and mention of the grant of the patent: **25.01.2023**
(21) Application number: 19752306.1
(22) Date of filing: 22.07.2019
(51) Int. Cl.: C22C 21/02, C22F 1/043

(54) **HIGHLY FORMABLE, RECYCLED ALUMINUM ALLOYS AND METHODS OF MAKING THE SAME**
HOCHFORMBARE RECYCELTE ALUMINIUMLEGIERUNGEN UND VERFAHREN ZUR HERSTELLUNG DAVON
ALLIAGES D'ALUMINIUM RECYCLÉS À APTITUDE AU FORMAGE ÉLEVÉE ET LEURS PROCÉDÉS DE PRÉPARATION

(30) Priority: 23.07.2018 US 201862701977 P; 26.02.2019 US 201962810585 P
(43) Date of publication of application: 02.06.2021
(73) Proprietor: Novelis, Inc., Atlanta, GA 30326 (US)
(72) Inventor: DAS, Sazol Kumar, Acworth, Georgia 30102 (US); HEYEN, Matthew, Kennesaw, GA 30152 (US); EVANS, Peter, Belleville, MI 48111 (US); BEECH, Martin, Warrington Cheshire WA4 2EZ (GB); SON, ChangOok, Marietta, Georgia 30066 (US); MARSH, Mark, Marietta, GA 30064 (US); KAMAT, Rajeev G., Marietta, Georgia 30062 (US); KOSSAK, Rainer, South Lyon, Michigan 48178 (US); FRYATT, David, Brownstown Township, MI 48134 (US); FISHER, David Scott, NY 13027 (US); FLOREY, Guillaume, 3968 Veyras (CH); BEZENCON, Cyrille, 3971 Chermignon d'en-bas (CH); TIMM, Juergen, 78256 Steisslingen (DE)
(74) Representative: Dey, Michael
(86) International application number: PCT/US2019/042809
(87) International publication number: WO 2020/023375

(56) References cited:
- WO-A1-2014/135367
- WO-A1-2019/010284
- FR-A1- 2 826 979
- LISA SWEET ET AL: "Hot Tear Susceptibility of Al-Mg-Si-Fe Alloys with Varying Iron Contents", METALLURGICAL AND MATERIALS TRANSACTIONS A: PHYSICAL METALLURGY & MATERIALS SCIENCE., vol. 44, no. 12, 11 December 2012 (2012-12-11), pages 5396-5407, XP055619459, US ISSN: 1073-5623, DOI: 10.1007/s11661-012-1562-1

## Description

### FIELD

The present disclosure relates to metallurgy generally and more specifically to producing aluminum alloys, optionally from recycled scrap, manufacturing aluminum alloy products, and recycling aluminum alloys. The published international application WO 2014/135367 discloses an Al-Mg-Si alloy composition and its method of manufacture into a sheet form that has excellent formability. It is intended for use in car body applications for the automotive industry.

### BACKGROUND

Due to the costs and time associated with producing primary aluminum, many original equipment manufacturers rely on existing aluminum-containing scrap to prepare aluminum alloy materials. However, recyclable scrap can be unsuitable for use in preparing high performance aluminum alloys, as the recyclable scrap can contain high levels of certain undesirable elements. For example, the recyclable scrap can include certain elements in amounts that affect the mechanical properties of the aluminum alloys, such as formability and strength.

### SUMMARY

Covered embodiments of the invention are defined by the claims, not this summary. This summary is a high-level overview of various aspects of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification, any or all drawings, and each claim.

Described herein are highly formable, recycled aluminum alloys and methods of producing the aluminum alloys. The aluminum alloys described herein comprise 0.7 to 1.4 wt. % Si, 0.2 to 0.3 wt. % Fe, up to 0.2 wt. % Cu, up to 0.4 wt. % Mg, 0.02 to 0.08 wt. % Mn, 0.02 to 0.05 wt. % Cr, 0.01 to 0.12 wt. % Sr, up to 0.1 wt.% Ti, up to 0.1 wt.% Zn, up to 0.15 wt. % total impurities, wherein each impurity is present in an amount of up to about 0.05 wt. %, and Al. In some non-limiting examples, the aluminum alloys comprise 1.0 to 1.4 wt. % Si, 0.22 to 0.28 wt. % Fe, up to 0.15 wt. % Cu, up to 0.35 wt. % Mg, 0.02 to 0.06 wt. % Mn, 0.02 to 0.04 wt. % Cr, 0.02 to 0.10 wt. % Sr, up to 0.1 wt.% Ti, up to 0.1 wt.% Zn, up to 0.15 wt. % impurities, and Al. Optionally, a combined content of Fe and Cr in the aluminum alloy is from 0.22 wt. % to about 0.5 wt. %.

Also described herein are aluminum alloy products comprising the aluminum alloys as described herein. In some examples, the aluminum alloy products comprise a grain size up to 35 µm (e.g., from about 25 µm to about 35 µm or from about 28 µm to about 32 µm). Optionally, the aluminum alloy products comprise iron-containing intermetallic particles. In some cases, at least 36 % of the iron-containing intermetallic particles can be spherical. In some non-limiting examples, at least 36 % (e.g., at least about 50 % or at least about 75 %) of the iron-containing intermetallic particles present in the aluminum alloy products have an equivalent circular diameter (i.e., "ECD") of 3 µm or less. Optionally, at least 36 % (e.g., at least about 50 %, at least about 70 %, or at least about 80 %) of the iron-containing intermetallic particles comprise α-AlFe(Mn,Cr)Si intermetallic particles. In some cases, a volume fraction of a cube textural component in the aluminum alloy product comprises at least 12 %. In some cases, the aluminum alloy products comprise a total elongation of at least 32 %. The aluminum alloy product can comprise an automobile body part, among others.

Further described herein are methods of producing an aluminum alloy product. The methods comprise casting an aluminum alloy as described herein to produce a cast aluminum alloy article, homogenizing the cast aluminum alloy article to produce a homogenized cast aluminum alloy article, hot rolling, and cold rolling the homogenized cast aluminum alloy article to produce a final gauge aluminum alloy product, and solution heat treating the final gauge aluminum alloy product. Optionally, the homogenizing is performed at a homogenization temperature of from 530 °C to 570 °C. Optionally, the aluminum alloy in the casting step comprises a recycled content in an amount of at least about 40 wt. %.

### BRIEF DESCRIPTION OF THE FIGURES

Figure 1A is a schematic depicting a processing method as described herein.
Figure 1B is a schematic depicting a processing method as described herein.
Figure 1C is a schematic depicting a processing method as described herein.
Figure 2 is a graph showing the yield strength of aluminum alloys as described herein.
Figure 3 is a graph showing the ultimate tensile strength of aluminum alloys as described herein.
Figure 4 is a graph showing the uniform elongation of aluminum alloys as described herein.
Figure 5 is a graph showing the total elongation of aluminum alloys as described herein.
Figure 6 is a graph showing the n-value (i.e., increase in strength after deformation) of aluminum alloys as described herein.
Figure 7 is a graph showing the r-value (i.e., anisotropy) of aluminum alloys as described herein.
Figure 8 is a graph showing the average r-value (i.e., anisotropy) of aluminum alloys as described herein.
Figure 9 is a graph showing the change in yield strength after paint baking of aluminum alloys as described herein.
Figure 10 is a graph showing the bendability of aluminum alloys as described herein.
Figure 11 is a graph showing the bendability of aluminum alloys as described herein.
Figure 12 is a graph showing cupping test results of aluminum alloys as described herein.
Figure 13A is a scanning electron microscope (SEM) micrograph depicting the particle distribution of an aluminum alloy product as described herein.
Figure 13B is a SEM micrograph depicting the particle distribution of a comparative aluminum alloy product.
Figure 13C is a SEM micrograph depicting the particle distribution of an aluminum alloy product as described herein.
Figure 13D is a SEM micrograph depicting the particle distribution of a comparative aluminum alloy product.
Figure 13E is a SEM micrograph depicting the particle distribution of a comparative aluminum alloy product.
Figure 14 is a graph showing the particle size distribution based on an equivalent circular diameter (ECD) measurement of non-spherical particles in an aluminum alloy as described herein.
Figure 15 is a graph showing the particle size distribution based on an aspect ratio measurement of the particles in an aluminum alloy as described herein.
Figure 16 is a graph showing the volume fraction of iron-containing constituent particles in aluminum alloys as described herein.
Figure 17 is a graph showing the number density of iron-containing constituent particles in aluminum alloys as described herein.
Figure 18A is an optical microscope (OM) micrograph depicting the grain structure of an aluminum alloy product as described herein.
Figure 18B is an OM micrograph depicting the grain structure of a comparative aluminum alloy product.
Figure 18C is an OM micrograph depicting the grain structure of an aluminum alloy product as described herein.
Figure 18D is an OM micrograph depicting the grain structure of a comparative aluminum alloy product.
Figure 18E is an OM micrograph depicting the grain structure of a comparative aluminum alloy product.
Figure 19 is a graph showing the average grain size of aluminum alloys as described herein.
Figure 20 is a graph showing the texture component content of aluminum alloys as described herein.

### DETAILED DESCRIPTION

Provided herein are aluminum alloy products having desirable mechanical properties and methods of casting and processing the same. The aluminum alloy products can be recycled as well as produced from recycled material (e.g., post-consumer scrap) and still exhibit desirable mechanical properties, such as good formability without cracking and/or fracture, high elongation before fracture, and good durability.

The aluminum alloy products described herein contain intermetallic particles that have a low aspect ratio (e.g., width to height ratio). In some cases, a low aspect ratio is a ratio of about 4 or less (e.g., about 3 or less, about 2 or less, or about 1.5 or less). In particular, the intermetallic particles are circular or spherical in shape. An aspect ratio of 1 (e.g., close to a circular cross section, i.e., spherical particles) is a preferable Fe-containing intermetallic particle shape for mechanical properties, for example bending, forming, crushing, and/or crash-testing. These intermetallic particles enhance the desirable mechanical properties of the products and result in products exhibiting superior results as compared to aluminum alloy products having intermetallic particles that are elliptical or needle-like in shape.

### Definitions and Descriptions

As used herein, the terms "invention," "the invention," "this invention" and "the present invention" are intended to refer broadly to all of the subject matter of this patent application and the claims below. Statements containing these terms should be understood not to limit the subject matter described herein or to limit the meaning or scope of the patent claims below.

In this description, reference is made to alloys identified by aluminum industry designations, such as "series" or "6xxx." For an understanding of the number designation system most commonly used in naming and identifying aluminum and its alloys, see "International Alloy Designations and Chemical Composition Limits for Wrought Aluminum and Wrought Aluminum Alloys," or "Registration Record of Aluminum Association Alloy Designations and Chemical Compositions Limits for Aluminum Alloys in the Form of Castings and Ingot," both published by The Aluminum Association.

As used herein, the meaning of "a," "an," or "the" includes singular and plural references unless the context clearly dictates otherwise.

As used herein, a plate generally has a thickness of greater than about 15 mm. For example, a plate may refer to an aluminum product having a thickness of greater than about 15 mm, greater than about 20 mm, greater than about 25 mm, greater than about 30 mm, greater than about 35 mm, greater than about 40 mm, greater than about 45 mm, greater than about 50 mm, greater than about 100 mm, or up to about 300 mm.

As used herein, a shate (also referred to as a sheet plate) generally has a thickness of from about 4 mm to about 15 mm. For example, a shate may have a thickness of about 4 mm, about 5 mm, about 6 mm, about 7 mm, about 8 mm, about 9 mm, about 10 mm, about 11 mm, about 12 mm, about 13 mm, about 14 mm, or about 15 mm.

As used herein, a sheet generally refers to an aluminum product having a thickness of less than about 4 mm. For example, a sheet may have a thickness of less than about 4 mm, less than about 3 mm, less than about 2 mm, less than about 1 mm, less than about 0.5 mm, less than about 0.3 mm, or less than about 0.1 mm.

Reference is made in this application to alloy temper or condition. For an understanding of the alloy temper descriptions most commonly used, see "American National Standards (ANSI) H35 on Alloy and Temper Designation Systems." An F condition or temper refers to an aluminum alloy as fabricated. An O condition or temper refers to an aluminum alloy after annealing. A T1 condition or temper refers to an aluminum alloy cooled from hot working and naturally aged (e.g., at room temperature). A T2 condition or temper refers to an aluminum alloy cooled from hot working, cold worked and naturally aged. A T3 condition or temper refers to an aluminum alloy solution heat treated, cold worked, and naturally aged. A T4 condition or temper refers to an aluminum alloy solution heat treated and naturally aged. A T5 condition or temper refers to an aluminum alloy cooled from hot working and artificially aged (at elevated temperatures). A T6 condition or temper refers to an aluminum alloy solution heat treated and artificially aged. A T7 condition or temper refers to an aluminum alloy solution heat treated and artificially overaged. A T8x condition or temper refers to an aluminum alloy solution heat treated, cold worked, and artificially aged. A T9 condition or temper refers to an aluminum alloy solution heat treated, artificially aged, and cold worked.

As used herein, the meaning of "room temperature" can include a temperature of from about 15 °C to about 30 °C, for example about 15 °C, about 16 °C, about 17 °C, about 18 °C, about 19 °C, about 20 °C, about 21 °C, about 22 °C, about 23 °C, about 24 °C, about 25 °C, about 26 °C, about 27 °C, about 28 °C, about 29 °C, or about 30 °C.

As used herein, terms such as "cast aluminum alloy article," "cast metal article," "cast article," and the like are interchangeable and refer to a product produced by direct chill casting (including direct chill co-casting) or semi-continuous casting, continuous casting (including, for example, by use of a twin belt caster, a twin roll caster, a block caster, or any other continuous caster), electromagnetic casting, hot top casting, or any other casting method, or any combination thereof.

All ranges disclosed herein are to be understood to encompass any endpoints and any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more, e.g., 1 to 6.1, and ending with a maximum value of 10 or less, e.g., 5.5 to 10.

The following aluminum alloys are described in terms of their elemental composition in weight percentage (wt. %) based on the total weight of the alloy. In certain examples of each alloy, the remainder is aluminum, with a maximum wt. % of 0.15 % for the sum of the impurities.

### Alloy Compositions

Described herein are novel aluminum alloys and products that exhibit desirable mechanical properties. Among other properties, the aluminum alloys and products described herein display excellent elongation and forming properties and exceptional durability. In some cases, the mechanical properties can be achieved due to the elemental composition of the alloys. For example, the alloys described herein include iron (Fe), manganese (Mn), and chromium (Cr). The presence of at least two of these components, for example Fe and Mn, Fe and Cr, or Fe, Mn, and Cr, in the described amounts results in desirable intermetallic particles. As described below, an Fe content of at least about 0.50 wt. % provides an increased number of intermetallic particles during the casting process. In addition, other elements, such as Mn and/or Cr, influence the size and aspect ratio of the intermetallic particles and result in small, spherical particles having a low aspect ratio. The intermetallic particles, in turn, serve as nucleation sites for new grains, thus resulting in an aluminum alloy product containing small, equiaxial grains rather than coarse, elongated grains. Such aluminum alloy products exhibit desired forming properties. The properties displayed by the aluminum alloy products described herein are unexpected, as a high Fe content of about 0.20 wt. % and greater typically results in a decrease in formability and bendability.

In some cases, an aluminum alloy as described herein can have the following elemental composition as provided in Table 1 (not according to the invention).

**Table 1**

| Element | Weight Percentage (wt. %) |
|---|---|
| Si | 0.5 - 2.0 |
| Fe | 0.2 - 0.4 |
| Cu | 0.0 - 0.4 |
| Mg | 0.0 - 0.5 |
| Mn | 0.02 - 0.1 |
| Cr | 0.01 - 0.1 |
| Sr | 0.0 - 0.15 |
| Others | 0 - 0.05 (each) |
| | 0 - 0.15 (total) |
| Al | |

The aluminum alloy of the invention as described herein has the following elemental composition as provided in Table 2.

**Table 2**

| Element | Weight Percentage (wt. %) |
|---|---|
| Si | 0.7 - 1.4 |
| Fe | 0.2 - 0.3 |
| Cu | 0.0 - 0.2 |
| Mg | 0.0 - 0.4 |
| Mn | 0.02 - 0.08 |
| Cr | 0.02 - 0.05 |
| Sr | 0.01 - 0.12 |
| Others | 0 - 0.05 (each) |
| | 0 - 0.15 (total) |
| Al | |

In some examples, the aluminum alloy of the invention as described herein can have the following elemental composition as provided in Table 3.

**Table 3**

| Element | Weight Percentage (wt. %) |
|---|---|
| Si | 1.0 - 1.4 |
| Fe | 0.22 - 0.28 |
| Cu | 0.0 - 0.15 |
| Mg | 0.0 - 0.35 |
| Mn | 0.02 - 0.06 |
| Cr | 0.02 - 0.04 |
| Sr | 0.02 - 0.1 |
| Others | 0 - 0.05 (each) |
| | 0 - 0.15 (total) |
| Al | |

The aluminum alloy described herein includes silicon (Si) in an amount of from 0.7 % to 1.4% (e.g., from about 1.0 to about 1.4 %) based on the total weight of the alloy. For example, the alloy can include 0.7 %, 0.71 %, 0.72 %, 0.73 %, 0.74 %, 0.75 %, 0.76 %, 0.77 %, 0.78 %, 0.79 %, 0.8 %, 0.81 %, 0.82 %, 0.83 %, 0.84 %, 0.85 %, 0.86 %, 0.87 %, 0.88 %, 0.89 %, 0.9 %, 0.91 %, 0.92 %, 0.93 %, 0.94 %, 0.95 %, 0.96 %, 0.97 %, 0.98 %, 0.99 %, 1.0 %, 1.01 %, 1.02 %, 1.03 %, 1.04 %, 1.05 %, 1.06 %, 1.07%, 1.08 %, 1.09 %, 1.1 %, 1.11 %, 1.12 %, 1.13 %, 1.14 %, 1.15 %, 1.16 %, 1.17 %, 1.18 %, 1.19 %, 1.2 %, 1.21 %, 1.22 %, 1.23 %, 1.24 %, 1.25 %, 1.26%, 1.27 %, 1.28 %, 1.29 %, 1.3 %, 1.31 %, 1.32 %, 1.33 %, 1.34 %, 1.35 %, 1.36 %, 1.37 %, 1.38 %, 1.39 %, or 1.4 % Si. All expressed in wt. %.

The aluminum alloy described herein includes iron (Fe) in an amount of from 0.2 % to 0.3 % (e.g., from about 0.2 % to about 0.28 %, or from about 0.22 % to about 0.28 %) based on the total weight of the alloy. For example, the alloy can include 0.2 %, 0.21 %, 0.22 %, 0.23 %, 0.24 %, 0.25 %, 0.26 %, 0.27 %, 0.28 %, 0.29 %, or 0.3 % Fe. All expressed in wt. %.

The aluminum alloy described herein includes copper (Cu) in an amount of up to 0.2 % (e.g., from 0.0 % to about 0.15 %) based on the total weight of the alloy. For example, the alloy can include 0.01 %, 0.02 %, 0.03 %, 0.04 %, 0.05 %, 0.06 %, 0.07 %, 0.08 %, 0.09 %, 0.1 %, 0.11 %, 0.12 %, 0.13 %, 0.14 %, 0.15 %, 0.16 %, 0.17 %, 0.18 %, 0.19 %, or 0.2 %. Cu. In some cases, Cu is not present in the alloy (i.e., 0 %). All expressed in wt. %.

The aluminum alloy described herein includes magnesium (Mg) in an amount of up to 0.4 % (e.g., from 0.0 % to about 0.35 %, or from about 0.2% to about 0.35 %) based on the total weight of the alloy. For example, the alloy can include 0.01 %, 0.02 %, 0.03 %, 0.04 %, 0.05 %, 0.06 %, 0.07 %, 0.08 %, 0.09 %, 0.1 %, 0.11 %, 0.12 %, 0.13 %, 0.14 %, 0.15 %, 0.16 %, 0.17 %, 0.18 %, 0.19 %, 0.2%, 0.21 %, 0.22 %, 0.23 %, 0.24 %, 0.25 %, 0.26 %, 0.27 %, 0.28 %, 0.29 %, 0.3 %, 0.31 %, 0.32 %, 0.33 %, 0.34 %, 0.35 %, 0.36 %, 0.37 %, 0.38 %, 0.39 %, or 0.4 % Mg. In some cases, Mg is not present in the alloy (i.e., 0 %). All expressed in wt. %.

The aluminum alloy described herein includes manganese (Mn) in an amount of from 0.02 % to 0.08 % (e.g., from about 0.02 % to about 0.06 %) based on the total weight of the alloy. For example, the alloy can include 0.02 %, 0.03 %, 0.04 %, 0.05 %, 0.06 %, 0.07 %, or 0.08 % Mn. All expressed in wt. %.

The aluminum alloy described herein includes chromium (Cr) in an amount of from 0.02 % to 0.05 % based on the total weight of the alloy. For example, the alloy can include 0.02 %, 0.03 %, 0.04 %, or 0.05 % Cr. All expressed in wt. %.

The aluminum alloy described herein includes strontium (Sr) in an amount of from 0.01 to 0.12 % (e.g., from about 0.02 % to about 0.10 %) based on the total weight of the alloy. For example, the alloy can include 0.01 %, 0.02 %, 0.03 %, 0.04 %, 0.05 %, 0.06 %, 0.07 %, 0.08 %, 0.09 %, 0.1 %, 0.11 %, or 0.12 % Sr. All expressed in wt. %. In some cases, adding Sr to the aluminum alloy described herein can further increase the formability and ductility of the material. Not to be bound by theory, the increase in formability can be due to the eutectic modification of the intermetallic particles that can reduce the lamellar spacing within the eutectic component during casting and solidification of the aluminum alloy. Thus, Sr modification of the eutectic component can allow the intermetallic particles to break apart into smaller and/or finer intermetallic particles during, for example, a hot rolling process. Finally, the finer intermetallic particles can reduce the tendency of the aluminum alloy to undergo internal damage during deformation (e.g., forming), thereby improving the formability of the aluminum alloy.

Optionally, the aluminum alloy described herein can include one or both of titanium (Ti) and zinc (Zn). In some examples, the aluminum alloy described herein includes Ti in an amount up to 0.1 % (e.g., from about 0.001 % to about 0.08 % or from about 0.005 % to about 0.06 %) based on the total weight of the alloy. For example, the alloy can include 0.001 %, 0.002 %, 0.003 %, 0.004 %, 0.005 %, 0.006 %, 0.007 %, 0.008 %, 0.009 %, 0.01 %, 0.02 %, 0.03 %, 0.04 %, 0.05 %, 0.06 %, 0.07 %, 0.08 %, 0.09 %, or 0.1 % Ti. In some cases, Ti is not present in the alloy (i.e., 0 %). In some examples, the aluminum alloy described herein includes Zn in an amount up to 0.1 % (e.g., from about 0.001 % to about 0.08 % or from about 0.005 % to about 0.06 %) based on the total weight of the alloy. For example, the alloy can include 0.001 %, 0.002 %, 0.003 %, 0.004 %, 0.005 %, 0.006 %, 0.007 %, 0.008 %, 0.009 %, 0.01 %, 0.02 %, 0.03 %, 0.04 %, 0.05 %, 0.06 %, 0.07 %, 0.08 %, 0.09 %, or 0.1 % Zn. In some cases, Zn is not present in the alloy (i.e., 0 %). All expressed in wt. %.

As described above, the presence of Fe in an amount of at least 0.2 wt. % and in combination with Cr is a factor that results in the desirable properties exhibited by aluminum alloy products described herein. Optionally, the combined content of Fe and Cr is at least 0.22 wt. %. In some cases, the combined content of Fe and Cr can be from about 0.22 wt. % to about 0.5 wt. %, from about 0.22 wt. % to about 0.4 wt. %, or from about 0.25 wt. % to about 0.35 wt. %. For example, the combined content of Fe and Cr can be 0.22 %, 0.23 %, 0.24 %, 0.25 %, 0.26 %, 0.27 %, 0.28 %, 0.29 %, 0.3 %, 0.31 %, 0.32 %, 0.33 %, 0.34 %, 0.35 %, 0.36 %, 0.37 %, 0.38 %, 0.39 %, 0.4 %, 0.41 %, 0.42 %, 0.43 %, 0.44 %, 0.45 %, 0.46 %, 0.47 %, 0.48 %, 0.49 %, or 0.5 %. All expressed in wt. %.

Optionally, the aluminum alloys described herein can further include other minor elements, sometimes referred to as impurities, in amounts of 0.05 % or below, 0.04 % or below, 0.03 % or below, 0.02 % or below, or 0.01 % or below. These impurities may include, but are not limited to V, Ni, Sc, Hf, Zr, Sn, Ga, Ca, Bi, Na, Pb, or combinations thereof. Accordingly, V, Ni, Sc, Hf, Zr, Sn, Ga, Ca, Bi, Na, or Pb may be present in alloys in amounts of 0.05 % or below, 0.04 % or below, 0.03 % or below, 0.02 % or below, or 0.01 % or below. The sum of all impurities does not exceed 0.15 % (e.g., 0.1 %). All expressed in wt. %. The remaining percentage of each alloy is aluminum.

The aluminum alloy products described herein include iron-containing intermetallic particles. In some cases, the iron-containing intermetallic particles are spherical. For example, at least 36 % of the iron-containing intermetallic particles are spherical (e.g., at least about 40 %, at least about 50 %, at least about 60 %, at least about 70 %, at least about 80 %, or at least about 90 % of the iron-containing intermetallic particles are spherical). At least 36 % of the particles present in the aluminum alloy products have a particle size, measured by equivalent circular diameter (i.e., "ECD"), of 3 µm or less (e.g., about 2.5 µm or less, about 2.0 µm or less, about 1.5 µm or less, or about 1.2 µm or less). The ECD can be determined by imposing an estimated circular cross-section on a non-spherical measured object. For example, the iron-containing intermetallic particles present in the aluminum alloy products can have an ECD of 3 µm or less, 2.9 µm or less, 2.8 µm or less, 2.7 µm or less, 2.6 µm or less, 2.5 µm or less, 2.4 µm or less, 2.3 µm or less, 2.2 µm or less, 2.1 µm or less, 2 µm or less, 1.9 µm or less, 1.8 µm or less, 1.7 µm or less, 1.6 µm or less, 1.5 µm or less, 1.4 µm or less, 1.3 µm or less, 1.2 µm or less, 1.1 µm or less, 1 µm or less, 0.9 µm or less, 0.8 µm or less, 0.7 µm or less, 0.6 µm or less, 0.5 µm or less, 0.4 µm or less, 0.3 µm or less, 0.2 µm or less, 0.1 µm or less, or anywhere in between. In some cases, at least 45 %, at least 50 %, at least 55 %, at least 60 %, at least 65 %, at least 70 %, at least 75 %, at least 80 %, at least 85 %, at least 90 %, at least 95 %, or at least 99 % of the particles present in the aluminum alloy products have an ECD of 3 µm or less.

In some non-limiting examples, the iron-containing intermetallic particles described herein comprise α - AlFe(Mn,Cr)Si intermetallic particles. The α - AlFe(Mn,Cr)Si intermetallic particles can be spherical particles. The aluminum alloys described herein having such spherical type intermetallic particles are amenable to forming (e.g., bending, shaping, stamping, or any suitable forming method) when compared to aluminum alloys that predominantly include β - AlFeSi intermetallic particles. The β - AlFeSi intermetallic particles typically have an elongated, needle-like shape. Such needle-like intermetallic particles are detrimental to forming and thus problematic when creating aluminum alloy parts from recycled aluminum alloys.

Introducing Cr in the concentrations described above (from 0.02 wt. % to 0.05 wt. %) into the aluminum alloy in a molten stage during production of a primary aluminum alloy) and/or recycling (e.g., by melting scrap aluminum alloys and optionally adding primary aluminum alloys) can allow the Cr to interact with any excess Fe found in the aluminum alloy (e.g., the molten alloy containing the primary aluminum alloy and the molten scrap) and provide the α - AlFe(Mn,Cr)Si intermetallic particles, thus replacing the β - AlFeSi intermetallic particles. Accordingly, replacing β - AlFeSi intermetallic particles with α - AlFe(Mn,Cr)Si intermetallic particles provides aluminum alloys that demonstrate high formability and durability. In some cases, at least 36 % of the iron-containing intermetallic particles in the aluminum alloys described herein are α-AlFe(Mn,Cr)Si intermetallic particles. For example, at least 36 %, at least 40 %, at least 45 %, at least 50 %, at least 55 %, at least 60 %, at least 65 %, at least 70 %, at least 75 %, at least 80 %, at least 85 %, at least 90 %, at least 95 %, or at least 99 % of the iron-containing intermetallic particles in the aluminum alloys described herein are α - AlFe(Mn,Cr)Si intermetallic particles.

In some cases, adding Cr as described herein can increase an amount of recycled content when providing the aluminum alloys. The aluminum alloys described herein can contain at least about 40 wt. % recycled content. For example, the aluminum alloys can contain at least about 45 wt. %, at least about 50 wt. %, at least about 60 wt. %, at least about 70 wt. %, at least about 80 wt. %, at least about 90 wt. %, or at least about 95 wt. % recycled content.

In some examples, the iron-containing intermetallic particles can be present in the aluminum alloy in an average amount of at least about 2000 to about 3000 particles per square millimeter (mm²). For example, the average amount of iron-containing intermetallic particles can be about 2000 particles/mm², 2100 particles/mm², 2200 particles/mm², 2300 particles/mm², 2400 particles/mm², 2500 particles/mm², 2600 particles/mm², 2700 particles/mm², 2800 particles/mm², 2900 particles/mm², 3000 particles/mm², or anywhere in between.

As described above, the intermetallic particles in the aluminum alloys can serve as nucleation sites for grains. The aluminum alloys and products including the aluminum alloys can include grains having an average grain size of up to 35 µm (e.g., from about 5 µm to about 35 µm, from about 25 µm to about 35 µm, or from about 28 µm to about 32 µm). For example, the average grain size can be about 1 µm, 5 µm, 10 µm, 15 µm, 20 µm, 25 µm, 30 µm, 35 µm, or anywhere in between.

In some cases, the aluminum alloy products can have a total elongation of at least about 27 % and up to about 40 % when in, for example, a T4 temper. For example, the aluminum alloy products can have a total elongation of about 27 %, 28 %, 29 %, 30 %, 31 %, 32 %, 33 %, 34 %, 35 %, 36 %, 37 %, 38 %, 39 %, or 40 %, or anywhere in between.

In some cases, the aluminum alloy products can have a uniform elongation of at least about 20 % and up to about 30 % when in, for example, a T4 temper. For example, the aluminum alloy products can have a uniform elongation of about 20 %, 21 %, 22 %, 23 %, 24 %, 25 %, 26 %, 27 %, 28 %, 29 %, or 30 %, or anywhere in between.

In some examples, the aluminum alloy products have a yield strength of about 100 MPa or greater when in, for example, a T4 temper. For example, the aluminum alloy products can have a yield strength of 105 MPa or greater, 110 MPa or greater, 115 MPa or greater, 120 MPa or greater, 125 MPa or greater, 130 MPa or greater, 135 MPa or greater, 140 MPa or greater, 145 MPa or greater, or 150 MPa or greater. In some cases, the yield strength is from about 100 MPa to about 150 MPa (e.g., from about 105 MPa to about 145 MPa, from about 110 MPa to about 140 MPa, or from about 115 MPa to about 135 MPa).

In some examples, the aluminum alloy products have an ultimate tensile strength of about 200 MPa or greater when in, for example, a T4 temper. For example, the aluminum alloy products can have an ultimate tensile strength of 205 MPa or greater, 210 MPa or greater, 215 MPa or greater, 220 MPa or greater, 225 MPa or greater, 230 MPa or greater, 235 MPa or greater, 240 MPa or greater, 245 MPa or greater, or 250 MPa or greater. In some cases, the ultimate tensile strength is from about 200 MPa to about 250 MPa (e.g., from about 205 MPa to about 245 MPa, from about 210 MPa to about 240 MPa, or from about 215 MPa to about 235 MPa).

The aluminum alloy products include at least a first surface portion having a plurality of crystallographic texture components. The crystallographic texture components can include recrystallization texture components (e.g., a Goss component, a Cube component, and Rotated Cube (RC) components including an RC_{RD1} component, an RC_{RD2} component, an RC_{RN1} component, and an RC_{RN2} component). The crystallographic texture components can also include deformation texture components (e.g., a Brass (Bs) component, an S component, a Copper component, a Shear 1 component, a Shear 2 component, a Shear 3 component, a P component, a Q component, and an R component).

In some examples, the aluminum alloy products can include a Cube component. Optionally, a volume fraction of the Cube component in the aluminum alloy products can be at least 12 % (e.g., at least about 13 %, at least about 14 %, at least about 15 %, at least about 16 %, at least about 17 %, or at least about 18 %). In some examples, the volume fraction of the Cube component in the aluminum alloy products is up to about 20 % (e.g., up to about 15 % or up to about 10 %). For example, the volume fraction of the Cube component in the aluminum alloy products can range from about 12 % to about 20 % (e.g., from about 13 % to about 20 % or from about 16 % to about 18 %).

In some examples, the aluminum alloy products can include a Brass component, an S component, a Copper component, and a Goss component. Optionally, a volume fraction of any one of the Brass, S, Copper, or Goss components in the aluminum alloy products can be lower than about 5 % (e.g., lower than about 4 %, lower than about 3 %, lower than about 2 %, or lower than about 1%). For example, the volume fraction of any one of the Brass, S, Copper, or Goss components in the aluminum alloy products can be from about 1 % to about 5 %, from about 1.5 % to about 4.5 %, or from about 2 % to about 4 %.

### Methods for Preparing the Aluminum Alloys

Aluminum alloy properties are partially determined by the formation of microstructures during the alloy's preparation. In certain aspects, the method of preparation for an alloy composition may influence or even determine whether the alloy will have properties adequate for a desired application.

### Casting

The aluminum alloys as described herein can be cast into a cast aluminum alloy article using any suitable casting method. For example, the casting process can include a direct chill (DC) casting process or a continuous casting (CC) process. In some non-limiting examples, the aluminum alloys for use in the casting step can be a primary material produced from raw materials (e.g., purified aluminum and additional alloying elements). In some further examples, the aluminum alloys for use in the casting step can be a recycled material, produced at least in part by aluminum scrap and optionally in combination with a primary material. In some cases, aluminum alloys for use in the casting step can contain at least about 40 % of recycled content. For example, the aluminum alloy for use in the casting step can contain at least about 45 %, at least about 50 %, at least about 60 %, at least about 70 %, at least about 80 %, at least about 90 %, or at least about 95 % of recycled content.

The cast aluminum alloy article can then be subjected to further processing steps. For example, the processing methods as described herein can include the steps of homogenizing, hot rolling, cold rolling, and/or solution heat treating to form an aluminum alloy product.

### Homogenization

The homogenization step as described herein was designed for the aluminum alloys described above. The aluminum alloys described herein have a high Si content (i.e., from 0.5 to 2.0 wt. %), which can lead to localized melting within the aluminum alloy matrix when homogenized at temperatures greater than about 550 °C (e.g., 560 °C and greater). Such localized melting can cause fracturing during downstream thermal processing steps. The homogenization step described herein is effective in dissolving any elemental Si and concurrently avoiding localized melting.

The homogenization step can include heating the cast aluminum alloy article to attain a temperature of about, or up to about, 570 °C (e.g., up to about 560 °C, up to about 550 °C, up to about 540 °C, up to about 530 °C, up to about 520 °C, up to about 510 °C, up to about 500 °C, up to about 490 °C, up to about 480 °C, up to about 470 °C, or up to about 460 °C). For example, the cast aluminum alloy article can be heated to a temperature of from about 460 °C to about 570 °C (e.g., from about 465 °C to about 570 °C, from about 470 °C to about 570 °C, from about 480 °C to about 570 °C, from about 490 °C to about 570 °C, from about 500 °C to about 570 °C, from about 510 °C to about 570 °C, from about 520 °C to about 570 °C, from about 530 °C to about 570 °C, from about 540 °C to about 570 °C, or from about 550 °C to about 570 °C). In some cases, the heating rate can be about 100 °C/hour or less, 75 °C/hour or less, 50 °C/hour or less, 40 °C/hour or less, 30 °C/hour or less, 25 °C/hour or less, 20 °C/hour or less, or 15 °C/hour or less. In other cases, the heating rate can be from about 10 °C/min to about 100 °C/min (e.g., from about 10 °C/min to about 90 °C/min, from about 10 °C/min to about 70 °C/min, from about 10 °C/min to about 60 °C/min, from about 20 °C/min to about 90 °C/min, from about 30 °C/min to about 80 °C/min, from about 40 °C/min to about 70 °C/min, or from about 50 °C/min to about 60 °C/min).

The cast aluminum alloy article is then allowed to soak for a period of time. According to one non-limiting example, the cast aluminum alloy article is allowed to soak for up to about 15 hours (e.g., from about 20 minutes to about 15 hours or from about 5 hours to about 10 hours, inclusively). For example, the cast aluminum alloy article can be soaked at a temperature of from about 500 °C to about 550 °C for about 20 minutes, about 30 minutes, about 45 minutes, about 1 hour, about 1.5 hours, about 2 hours, about 3 hours, about 4 hours, about 5 hours, about 6 hours, about 7 hours, about 8 hours, about 9 hours, about 10 hours, about 11 hours, about 12 hours, about 13 hours, about 14 hours, about 15 hours, or anywhere in between.

### Hot Rolling

Following the homogenization step, a hot rolling step can be performed. In certain cases, the cast aluminum alloy articles are laid down and hot-rolled with an entry temperature range of about 500 °C to 560 °C (e.g., from about 510 °C to about 550 °C or from about 520 °C to about 540 °C). The entry temperature can be, for example, about 505 °C, 510 °C, 515 °C, 520 °C, 525 °C, 530 °C, 535 °C, 540 °C, 545 °C, 550 °C, 555 °C, 560 °C, or anywhere in between. In certain cases, the hot roll exit temperature can range from about 200 °C to about 290 °C (e.g., from about 210 °C to about 280 °C or from about 220 °C to about 270 °C). For example, the hot roll exit temperature can be about 200 °C, 205 °C, 210 °C, 215 °C, 220 °C, 225 °C, 230 °C, 235 °C, 240 °C, 245 °C, 250 °C, 255 °C, 260 °C, 265 °C, 270 °C, 275 °C, 280 °C, 285 °C, 290 °C, or anywhere in between.

In certain cases, the cast aluminum alloy article is hot rolled to an about 4 mm to about 15 mm gauge (e.g., from about 5 mm to about 12 mm gauge), which is referred to as a hot band. For example, the cast article can be hot rolled to a 15 mm gauge, a 14 mm gauge, a 13 mm gauge, a 12 mm gauge, a 11 mm gauge, a 10 mm gauge, a 9 mm gauge, an 8 mm gauge, a 7 mm gauge, a 6 mm gauge, a 5 mm gauge, or a 4 mm gauge. The temper of the as-rolled hot band is referred to as F-temper.

### Coil Cooling

Optionally, the hot band can be coiled into a hot band coil (i.e., an intermediate gauge aluminum alloy product coil) upon exit from the hot mill. In some examples, the hot band is coiled into a hot band coil upon exit from the hot mill resulting in F-temper. In some further examples, the hot band coil is cooled in air. The air cooling step can be performed at a rate of about 12.5 °C/hour (°C/h) to about 3600 °C/h. For example, the coil cooling step can be performed at a rate of about 12.5 °C/h, 25 °C/h, 50 °C/h, 100 °C/h, 200 °C/h, 400 °C/h, 800 °C/h, 1600 °C/h, 3200 °C/h, 3600 °C/h, or anywhere in between. In some still further examples, the air cooled coil is stored for a period of time. In some examples, the intermediate coils are maintained at a temperature of about 100 °C to about 350 °C (for example, about 200 °C or about 300 °C).

### Cold Rolling

A cold rolling step can optionally be performed before the solution heat treating step. In certain aspects, the hot band is cold rolled to a final gauge aluminum alloy product (e.g., a sheet). In some examples, the final gauge aluminum alloy sheet has a thickness of 4 mm or less, 3 mm or less, 2 mm or less, 1 mm or less, 0.9 mm or less, 0.8 mm or less, 0.7 mm or less, 0.6 mm or less, 0.5 mm or less, 0.4 mm or less, 0.3 mm or less, 0.2 mm or less, or 0.1 mm.

### Optional Inter-Annealing

In some non-limiting examples, an optional inter-annealing step can be performed during cold rolling. For example, the hot band can be cold rolled to an intermediate cold roll gauge, annealed, and subsequently cold rolled to a final gauge. In some aspects, the optional inter-annealing can be performed in a batch process (i.e., a batch inter-annealing step). The inter-annealing step can be performed at a temperature of from about 300 °C to about 450 °C (e.g., about 310 °C, about 320 °C, about 330 °C, about 340 °C, about 350 °C, about 360 °C, about 370 °C, about 380 °C, about 390 °C, about 400 °C, about 410 °C, about 420 °C, about 430 °C, about 440 °C, or about 450 °C).

### Solution Heat Treating

The solution heat treating step can include heating the final gauge aluminum alloy product from room temperature to a peak metal temperature. Optionally, the peak metal temperature can be from about 530 °C to about 570 °C (e.g., from about 535 °C to about 560 °C, from about 545 °C to about 555 °C, or about 540 °C). The final gauge aluminum alloy product can soak at the peak metal temperature for a period of time. In certain aspects, the final gauge aluminum alloy product is allowed to soak for up to approximately 2 minutes (e.g., from about 10 seconds to about 120 seconds inclusively). For example, the final gauge aluminum alloy product can be soaked at the temperature of from about 530 °C to about 570 °C for 10 seconds, 15 seconds, 20 seconds, 25 seconds, 30 seconds, 35 seconds, 40 seconds, 45 seconds, 50 seconds, 55 seconds, 60 seconds, 65 seconds, 70 seconds, 75 seconds, 80 seconds, 85 seconds, 90 seconds, 95 seconds, 100 seconds, 105 seconds, 110 seconds, 115 seconds, 120 seconds, or anywhere in between. After solution heat treating, the final gauge aluminum alloy product can be quenched from the peak metal temperature at a rate of at least about 75 °C per second (°C/s). For example, the final gauge aluminum alloy product can be quenched at a rate of about 75 °C/s, 100 °C/s, 125 °C/s, 150 °C/s, 175 °C/s, 200 °C/s, or anywhere in between.

Optionally, the aluminum alloy product can then be naturally aged and/or artificially aged. In some non-limiting examples, the aluminum alloy product can be naturally aged to a T4 temper by storing at room temperature (e.g., about 15 °C, about 20 °C, about 25 °C, or about 30 °C) for at least 72 hours. For example, the aluminum alloy product can be naturally aged for 72 hours, 84 hours, 96 hours, 108 hours, 120 hours, 132 hours, 144 hours, 156 hours, 168 hours, 180 hours, 192 hours, 204 hours, 216 hours, 240 hours, 264 hours, 288 hours, 312 hours, 336 hours, 360 hours, 384 hours, 408 hours, 432 hours, 456 hours, 480 hours, 504 hours, 528 hours, 552 hours, 576 hours, 600 hours, 624 hours, 648 hours, 672 hours, or anywhere in between.

### Methods of Using

The alloys and methods described herein can be used in automotive and/or transportation applications, including motor vehicle, aircraft, and railway applications, or any other desired application. In some examples, the alloys and methods can be used to prepare motor vehicle body part products, such as safety cages, bodies-in-white, crash rails, bumpers, side beams, roof beams, cross beams, pillar reinforcements (e.g., A-pillars, B-pillars, and C-pillars), inner panels, outer panels, side panels, inner hoods, outer hoods, or trunk lid panels. The aluminum alloys and methods described herein can also be used in aircraft or railway vehicle applications, to prepare, for example, external and internal panels.

The alloys and methods described herein can also be used in electronics applications, to prepare, for example, external and internal encasements. For example, the alloys and methods described herein can also be used to prepare housings for electronic devices, including mobile phones and tablet computers. In some examples, the alloys can be used to prepare housings for the outer casing of mobile phones (e.g., smart phones) and tablet bottom chassis.

### Illustrations of Suitable Alloys, Products, and Methods

Illustration 1 is an aluminum alloy outside the scope of the invention, comprising about 0.5 to 2.0 wt. % Si, 0.2 to 0.4 wt. % Fe, up to 0.4 wt. % Cu, up to 0.5 wt. % Mg, 0.02 to 0.1 wt. % Mn, 0.01 to 0.1 wt. % Cr, up to 0.15 wt. % Sr, up to 0.15 wt. % impurities, and Al.

Illustration 2 is the aluminum alloy of any preceding or subsequent illustration, comprising about 0.7 to 1.4 wt. % Si, 0.2 to 0.3 wt. % Fe, up to 0.2 wt. % Cu, up to 0.4 wt. % Mg, 0.02 to 0.08 wt. % Mn, 0.02 to 0.05 wt. % Cr, 0.01 to 0.12 wt. % Sr, up to 0.15 wt. % impurities, and Al.

Illustration 3 is the aluminum alloy of any preceding or subsequent illustration, comprising about 1.0 to 1.4 wt. % Si, 0.22 to 0.28 wt. % Fe, up to 0.15 wt. % Cu, up to 0.35 wt. % Mg, 0.02 to 0.06 wt. % Mn, 0.02 to 0.04 wt. % Cr, 0.02 to 0.10 wt. % Sr, up to 0.15 wt. % impurities, and Al.

Illustration 4 is the aluminum alloy of any preceding or subsequent illustration, wherein a combined content of Fe and Cr is from about 0.22 wt. % to 0.50 wt. %.

Illustration 5 is an aluminum alloy product, comprising the aluminum alloy according to any preceding or subsequent illustration.

Illustration 6 is the aluminum alloy product of any preceding or subsequent illustration, wherein the aluminum alloy product comprises a grain size of up to about 35 µm.

Illustration 7 is the aluminum alloy product of any preceding or subsequent illustration, wherein the grain size is from about 25 µm to about 35 µm.

Illustration 8 is the aluminum alloy product of any preceding or subsequent illustration, comprising iron-containing intermetallic particles.

Illustration 9 is the aluminum alloy product of any preceding or subsequent illustration, wherein at least about 36 % of the iron-containing intermetallic particles are spherical.

Illustration 10 is the aluminum alloy product of any preceding or subsequent illustration, wherein at least about 36 % of the iron-containing intermetallic particles present in the aluminum alloy product have an equivalent circular diameter of about 3 µm or less.

Illustration 11 is the aluminum alloy product of any preceding or subsequent illustration, wherein at least about 50 % of the iron-containing intermetallic particles present in the aluminum alloy product have an equivalent circular diameter of about 3 µm or less.

Illustration 12 is the aluminum alloy product of any preceding or subsequent illustration, wherein at least about 75 % of the iron-containing intermetallic particles present in the aluminum alloy product have an equivalent circular diameter of about 3 µm or less.

Illustration 13 is the aluminum alloy product of any preceding or subsequent illustration, wherein at least about 36 % of the iron-containing intermetallic particles comprise α-AlFe(Mn,Cr)Si intermetallic particles.

Illustration 14 is the aluminum alloy product of any preceding or subsequent illustration, wherein at least about 50 % of the iron-containing intermetallic particles comprise α-AlFe(Mn,Cr)Si intermetallic particles.

Illustration 15 is the aluminum alloy product of any preceding or subsequent illustration, wherein at least about 80 % of the iron-containing intermetallic particles comprise α-AlFe(Mn,Cr)Si intermetallic particles.

Illustration 16 is the aluminum alloy product of any preceding or subsequent illustration, wherein a volume fraction of a cube textural component in the aluminum alloy product comprises at least about 12 %.

Illustration 17 is the aluminum alloy product of any preceding or subsequent illustration, wherein the aluminum alloy product comprises a total elongation of at least about 32 %.

Illustration 18 is the aluminum alloy product of any preceding or subsequent illustration, wherein the aluminum alloy product comprises an automobile body part.

Illustration 19 is a method of producing an aluminum alloy product, comprising: casting an aluminum alloy according to any preceding or subsequent illustration to produce a cast aluminum alloy article; homogenizing the cast aluminum alloy article to produce a homogenized cast aluminum alloy article; hot rolling and cold rolling the homogenized cast aluminum alloy article to produce a final gauge aluminum alloy product; and solution heat treating the final gauge aluminum alloy product.

Illustration 20 is the method of any preceding or subsequent illustration, wherein the homogenizing is performed at a homogenization temperature of from about 530 °C to about 570 °C.

Illustration 21 is the method of any preceding illustration, wherein the aluminum alloy in the casting comprises a recycled content in an amount of at least about 40 wt. %.

The following examples will serve to further illustrate the present invention without, however, constituting any limitation thereof. On the contrary, it is to be clearly understood that resort may be had to various embodiments, modifications, and equivalents thereof which, after reading the description herein, may suggest themselves to those skilled in the art without departing from the spirit of the invention.

### EXAMPLES

### Example 1: Properties of the Aluminum Alloy Product

Aluminum alloy products were prepared having the compositions as shown in Table 4: Alloys 1-4 all have compositions that are outside the scope of the invention.

**Table 4**

| **Alloy** | **Si** | **Fe** | **Cu** | **Mn** | **Mg** | **Ti** | **Zn** | **Cr** |
|---|---|---|---|---|---|---|---|---|
| Alloy 1 | 1.33 | 0.26 | 0.12 | 0.057 | 0.31 | 0.017 | 0.006 | 0.025 |
| Alloy 2 | 1.34 | 0.14 | 0.11 | 0.056 | 0.30 | 0.018 | 0.015 | 0.015 |
| Alloy 3 | 0.79 | 0.23 | 0.10 | 0.074 | 0.63 | 0.019 | 0.008 | 0.036 |
| Alloy 4 | 0.62 | 0.23 | 0.12 | 0.076 | 0.65 | 0.023 | 0.008 | 0.034 |

In Table 4, all values are weight percent (wt. %) of the whole. The alloys can contain up to 0.15 wt. % total impurities and the remainder is aluminum. Alloy 1 is a highly recyclable aluminum alloy as described herein, containing 0.26 wt. % Fe and 0.025 wt. % Cr. Alloy 2, Alloy 3, and Alloy 4 are comparative 6xxx series aluminum alloys.

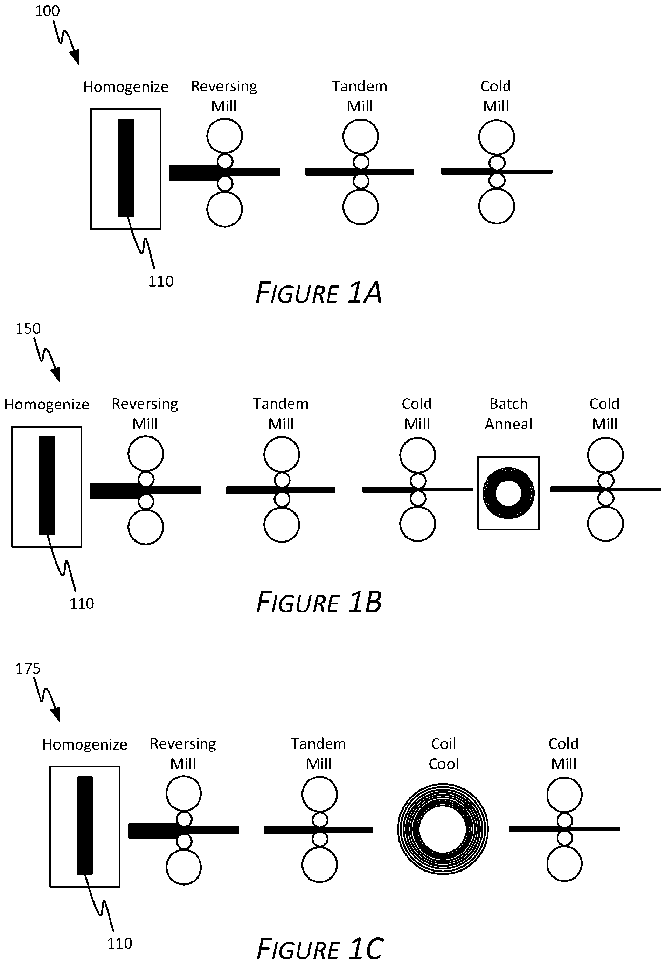

Alloy 1 and Alloy 2 were each processed by a method without a batch inter-annealing step (referred to herein as "no BA"), with a batch inter-annealing step (referred to herein as "BA"), and by a process with a coil cooling step (referred to herein as "CC"). Figure 1A is a schematic depicting a processing method 100 employed herein. Alloy 1 and Alloy 2 were direct chill cast to provide an ingot 110. The ingot 110 was subjected to a homogenization step as described above. The ingot 110 was then subjected to hot rolling in a reversing mill to break down the ingot 110. After break down, the ingot 110 was further subjected to hot rolling in a tandem mill to provide an intermediate gauge aluminum alloy product. The intermediate gauge aluminum alloy product was further subjected to cold rolling in a cold mill to provide a final gauge aluminum alloy product.

Figure 1B is a schematic depicting a second processing method 150 including a batch inter-annealing step employed herein. Alloy 1 and Alloy 2 were each direct chill cast to provide an ingot 110. The ingot 110 was subjected to a homogenization step as described above. The ingot 110 was then subjected to hot rolling in a reversing mill to break down the ingot 110. After break down, the ingot 110 was further subjected to hot rolling in a tandem mill to provide an intermediate gauge aluminum alloy product. The intermediate gauge aluminum alloy product was further subjected to cold rolling in a cold mill. Alloy 1 and Alloy 2 were coiled and annealed in a furnace in a batch inter-annealing step as described above. After batch inter-annealing, Alloy 1 and Alloy 2 were further cold rolled to the final gauge.

Figure 1C is a schematic depicting a third processing method 175 employed herein. Alloy 3 and Alloy 4 were each direct chill cast to provide an ingot 110. The ingot 110 was subjected to a homogenization step as described above. The ingot 110 was then subjected to hot rolling in a reversing mill to break down the ingot 110. After break down, the ingot 110 was further subjected to hot rolling in a tandem mill to provide an intermediate gauge aluminum alloy product. After hot rolling, the intermediate gauge aluminum alloy product was coiled and the aluminum alloy intermediate gauge product coil was allowed to cool to room temperature. The intermediate gauge aluminum alloy product was further subjected to cold rolling in a cold mill to provide a final gauge aluminum alloy product.

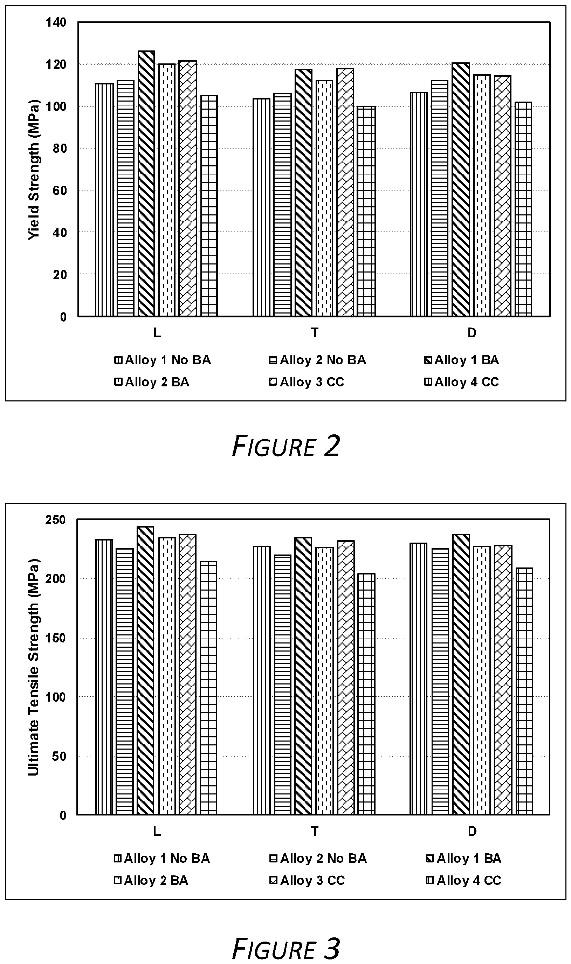

Figure 2 is a graph showing the yield strengths of test samples taken from Alloy 1, Alloy 2, Alloy 3, and Alloy 4. Tensile properties were evaluated in three directions including longitudinal (referred to as "L"), transverse (referred to as "T"), and diagonal (referred to as "D"), all with respect to the rolling direction during processing. Alloy 1 and Alloy 2 were processed according to the processing method of Figure 1A without a batch inter-annealing step during cold rolling ("no BA") and also according to the processing method of Figure 1B including the batch inter-annealing step during cold rolling ("BA") to provide Alloy 1 and Alloy 2 in a T4 temper. Alloy 3 and Alloy 4 were processed via the processing method of Figure 1C with a coil cooling step before cold rolling ("CC"). In Figure 2, the tensile properties are shown in sets based on the direction (i.e., L, T, or D). The first histogram bar for each set represents Alloy 1 processed without batch annealing ("Alloy 1 No BA"), the second histogram bar for each set represents Alloy 2 processed without batch annealing ("Alloy 2 No BA"), the third histogram bar for each set represents Alloy 1 processed with batch annealing ("Alloy 1 BA"), the fourth histogram bar for each set represents Alloy 2 processed with batch annealing ("Alloy 2 BA"), the fifth histogram bar for each set represents Alloy 3 processed according to the coil cooling method ("Alloy 3 CC"), and the sixth histogram bar for each set represents Alloy 4 processed according to the coil cooling method ("Alloy 4 CC"). As shown in Figure 2, the yield strengths of both Alloy 1 and Alloy 2 in T4 temper ranged from 105 MPa to 125 MPa irrespective of tensile test direction or processing method, demonstrating isotropic tensile properties. Additionally, Alloy 1 exhibited excellent yield strength, thus demonstrating a recyclable, highly formable aluminum alloy having ample strength for various automotive applications (e.g., structural parts, aesthetic parts, and/or any combination thereof).

Figure 3 is a graph showing the ultimate tensile strength of test samples taken from Alloy 1, Alloy 2, Alloy 3, and Alloy 4. Preparation, processing and testing were performed as in the example of Figure 2. In Figure 3, the tensile properties are shown in sets based on the direction (i.e., L, T, or D). The first histogram bar for each set represents Alloy 1 processed without batch annealing ("Alloy 1 No BA"), the second histogram bar for each set represents Alloy 2 processed without batch annealing ("Alloy 2 No BA"), the third histogram bar for each set represents Alloy 1 processed with batch annealing ("Alloy 1 BA"), the fourth histogram bar for each set represents Alloy 2 processed with batch annealing ("Alloy 2 BA"), the fifth histogram bar for each set represents Alloy 3 processed according to the coil cooling method ("Alloy 3 CC"), and the sixth histogram bar for each set represents Alloy 4 processed according to the coil cooling method ("Alloy 4 CC"). As shown in Figure 3, Alloy 1 exhibited excellent ultimate tensile strength, thus demonstrating a recyclable, highly formable aluminum alloy having ample strength for various automotive applications.

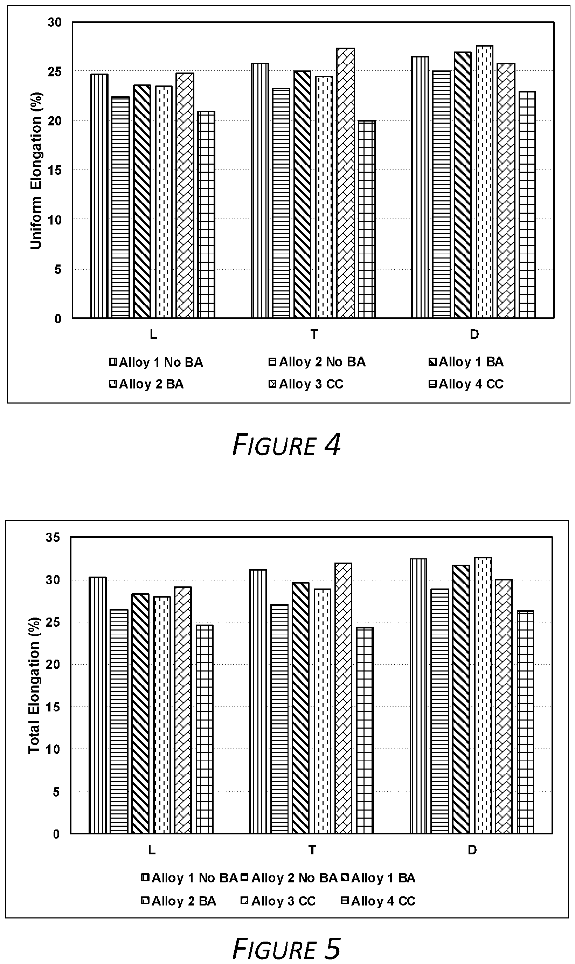

Figure 4 is a graph showing the uniform elongation of test samples taken from Alloy 1, Alloy 2, Alloy 3, and Alloy 4. Formability properties were evaluated in three directions including longitudinal (referred to as "L"), transverse (referred to as "T"), and diagonal (referred to as "D"), all with respect to the rolling direction during processing. Alloy 1 and Alloy 2 were processed according to the methods depicted in Figures 1A and 1B, as described above, and Alloy 3 and Alloy 4 were processed according to the method depicted in Figure 1C, as described above with a coil cooling step before cold rolling ("CC"). In Figure 4, the tensile properties are shown in sets based on the direction (i.e., L, T, or D). The first histogram bar for each set represents Alloy 1 processed without batch annealing ("Alloy 1 No BA"), the second histogram bar for each set represents Alloy 2 processed without batch annealing ("Alloy 2 No BA"), the third histogram bar for each set represents Alloy 1 processed with batch annealing ("Alloy 1 BA"), the fourth histogram bar for each set represents Alloy 2 processed with batch annealing ("Alloy 2 BA"), the fifth histogram bar for each set represents Alloy 3 processed according to the coil cooling method ("Alloy 3 CC"), and the sixth histogram bar for each set represents Alloy 4 processed according to the coil cooling method ("Alloy 4 CC"). As shown in Figure 4, Alloy 1 exhibited greater elongation in each direction (L, T, and D) than Alloy 2 and Alloy 4.

Figure 5 is a graph showing the total elongation of test samples taken from Alloy 1, Alloy 2, Alloy 3, and Alloy 4. Alloy 1 and Alloy 2 were processed according to the methods described above and depicted in Figures 1A and 1B, respectively, and Alloy 3 and Alloy 4 were processed according to the method depicted in Figure 1C, as described above, with a coil cooling step before cold rolling ("CC"). In Figure 5, the tensile properties are shown in sets based on the direction (i.e., L, T, or D). The first histogram bar for each set represents Alloy 1 processed without batch annealing ("Alloy 1 No BA"), the second histogram bar for each set represents Alloy 2 processed without batch annealing ("Alloy 2 No BA"), the third histogram bar for each set represents Alloy 1 processed with batch annealing ("Alloy 1 BA"), the fourth histogram bar for each set represents Alloy 2 processed with batch annealing ("Alloy 2 BA"), the fifth histogram bar for each set represents Alloy 3 processed according to the coil cooling method ("Alloy 3 CC"), and the sixth histogram bar for each set represents Alloy 4 processed according to the coil cooling method ("Alloy 4 CC"). As shown in Figure 5, the total elongations of both Alloy 1 and Alloy 2 in T4 temper were between 26 - 32 % irrespective of the tensile test direction or processing method, showing the isotropic properties of Alloy 1 and Alloy 2. Additionally, Alloy 1 exhibited higher formability than Alloy 2 and Alloy 4, and comparable formability to Alloy 3. Thus, Alloy 1 as prepared and processed herein is a highly formable recyclable aluminum alloy.

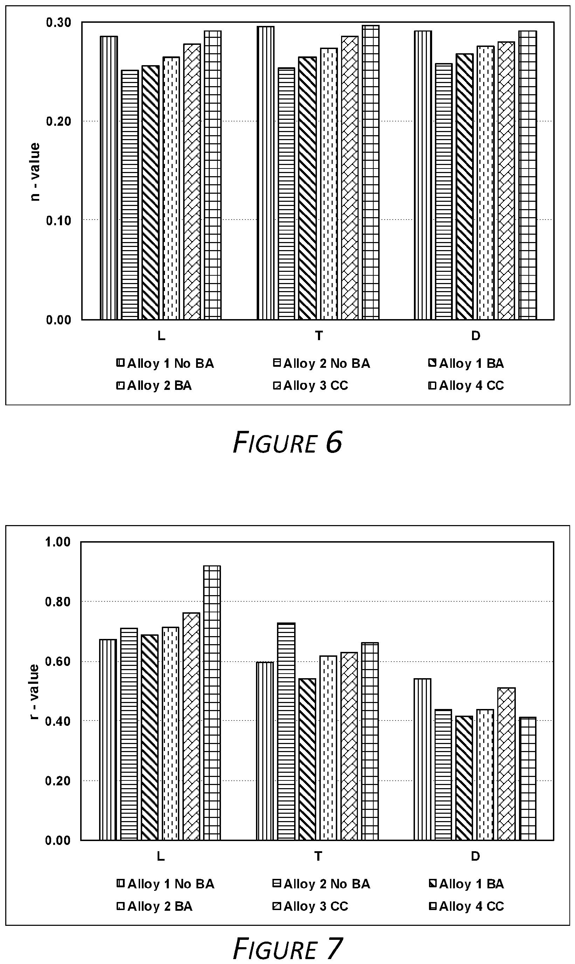

Figure 6 is a graph showing n-values (i.e., increase in strength after deformation) for Alloy 1, Alloy 2, Alloy 3, and Alloy 4, each prepared and processed as described above. In Figure 6, the n-values are shown in sets based on the direction (i.e., L, T, or D). The first histogram bar for each set represents Alloy 1 processed without batch annealing ("Alloy 1 No BA"), the second histogram bar for each set represents Alloy 2 processed without batch annealing ("Alloy 2 No BA"), the third histogram bar for each set represents Alloy 1 processed with batch annealing ("Alloy 1 BA"), the fourth histogram bar for each set represents Alloy 2 processed with batch annealing ("Alloy 2 BA"), the fifth histogram bar for each set represents Alloy 3 processed according to the coil cooling method ("Alloy 3 CC"), and the sixth histogram bar for each set represents Alloy 4 processed according to the coil cooling method ("Alloy 4 CC"). As shown in Figure 6, Alloy 1 and Alloy 2 samples subjected to the method of Figure 1A without the batch inter-annealing step exhibited higher n-values, and thus improved forming ability. Additionally, Alloy 1 exhibited isotropic properties having equivalent n-values regardless of testing direction (e.g, L, T, and D).

Figure 7 is a graph showing r-values (i.e., anisotropy) for Alloy 1, Alloy 2, Alloy 3, and Alloy 4, each prepared and processed as described above. In Figure 7, the r-values are shown in sets based on the direction (i.e., L, T, or D). The first histogram bar for each set represents Alloy 1 processed without batch annealing ("Alloy 1 No BA"), the second histogram bar for each set represents Alloy 2 processed without batch annealing ("Alloy 2 No BA"), the third histogram bar for each set represents Alloy 1 processed with batch annealing ("Alloy 1 BA"), the fourth histogram bar for each set represents Alloy 2 processed with batch annealing ("Alloy 2 BA"), the fifth histogram bar for each set represents Alloy 3 processed according to the coil cooling method ("Alloy 3 CC"), and the sixth histogram bar for each set represents Alloy 4 processed according to the coil cooling method ("Alloy 4 CC"). As shown in the graph, Alloy 1 processed via the method of Figure 1B (including the batch inter-annealing step) exhibited r-values greater than 0.5 in all three directions (e.g., longitudinal, transverse, and diagonal.

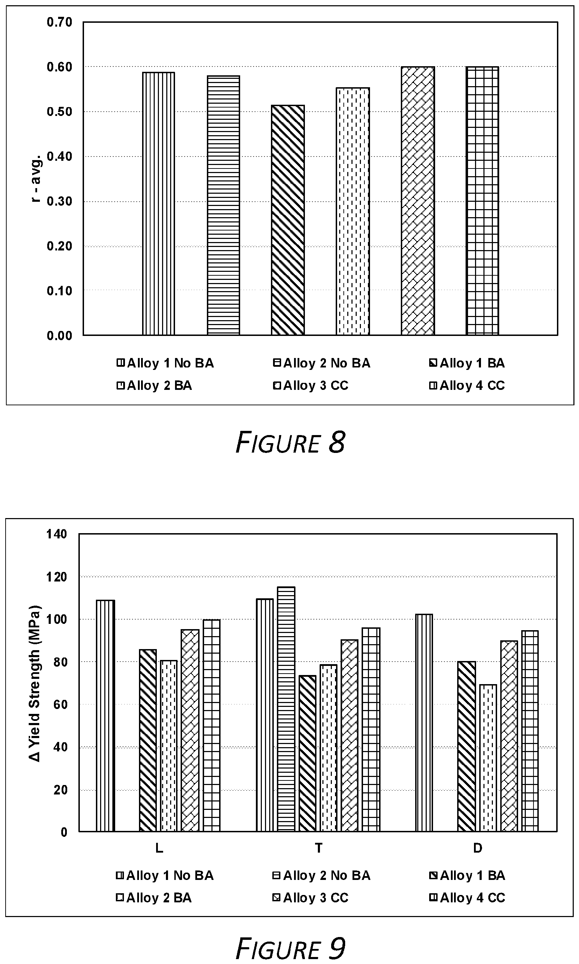

Figure 8 is a graph showing average r-values for Alloys 1, 2, 3, and 4. The first histogram bar represents Alloy 1 processed without batch annealing ("Alloy 1 No BA"), the second histogram bar represents Alloy 2 processed without batch annealing ("Alloy 2 No BA"), the third histogram bar represents Alloy 1 processed with batch annealing ("Alloy 1 BA"), the fourth histogram bar represents Alloy 2 processed with batch annealing ("Alloy 2 BA"), the fifth histogram bar represents Alloy 3 processed according to the coil cooling method ("Alloy 3 CC"), and the sixth histogram bar represents Alloy 4 processed according to the coil cooling method ("Alloy 4 CC"). As shown in Figure 8, Alloy 1 and Alloy 2 prepared according to the process of Figure 1B (including batch inter-annealing) provided lower r-values than alloys processed according to the process of Figure 1A (without the batch inter-annealing step). Alloys 1 and 2 exhibited similar r-values regardless of processing route.

Figure 9 is a graph showing the change in yield strength after paint baking for Alloy 1 and Alloy 2 prepared and processed according to the methods described above in the examples of Figure 1A and Figure 1B, and Alloy 3 and Alloy 4 prepared and processed according to the methods described above in the example of Figure 1C. After processing, paint baking was performed by applying a 2 % strain and a subsequent thermal treatment by heating to 185 °C and maintaining the sample at this temperature for 20 minutes. In Figure 9, the change in yield strength values are shown in sets based on the direction (i.e., L, T, or D). The first histogram bar for each set represents Alloy 1 processed without batch annealing ("Alloy 1 No BA"), the second histogram bar for each set (if present) represents Alloy 2 processed without batch annealing ("Alloy 2 No BA"), the third histogram bar for each set represents Alloy 1 processed with batch annealing ("Alloy 1 BA"), the fourth histogram bar for each set represents Alloy 2 processed with batch annealing ("Alloy 2 BA"), the fifth histogram bar for each set represents Alloy 3 processed according to the coil cooling method ("Alloy 3 CC"), and the sixth histogram bar for each set represents Alloy 4 processed according to the coil cooling method ("Alloy 4 CC"). As shown in Figure 9, the yield strength of Alloy 1 and Alloy 2 increased to 190 - 220 MPa by employing the additional straining and thermal treatment. Additionally, no significant difference in paint bake response was observed between Alloy 1 and Alloy 2 regardless of Fe content (Alloy 1 having 0.26 wt. % Fe and Alloy 2 having 0.16 wt. % Fe). Further, Si in aluminum alloys is known to bind with Fe to form more Fe - constituent particles and reduce the paint bake response, which is not shown in Alloy 1.

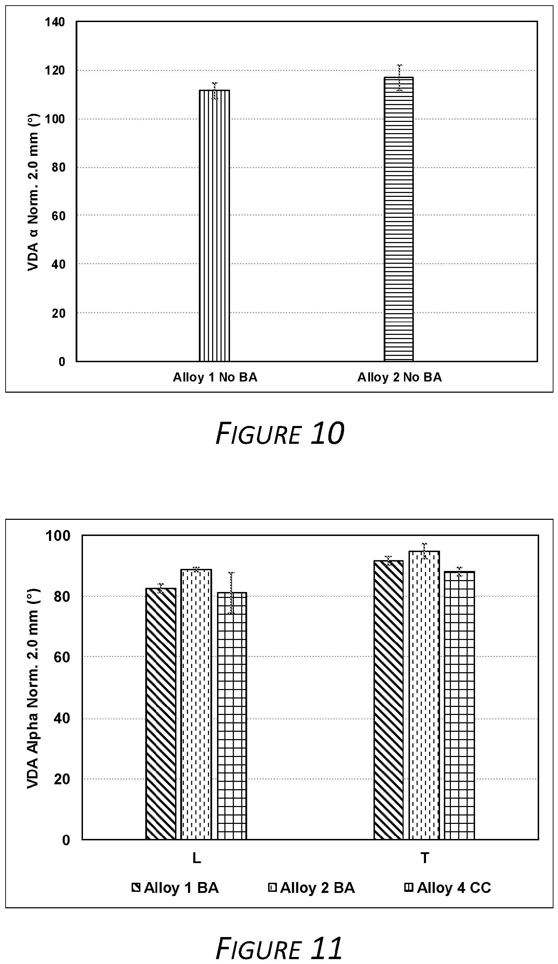

Figure 10 is a graph showing the bendability of Alloy 1 and Alloy 2 prepared and processed according to the process of Figure 1A and subjected to the VDA 238-100 three-point bend test. Prior to bend testing, Alloy 1 and Alloy 2 were subjected to a 10 % strain in the transverse direction. As shown in the graph, Alloy 1 and Alloy 2, having significantly different Fe content, exhibited similar bendability. An increase in Fe content can adversely affect formability (e.g., bending); however, due to added Cr, Fe-containing intermetallic particles exhibited a lower aspect ratio and reduced average equivalent circular diameter, providing excellent formability.

Figure 11 is a graph showing the bendability of Alloy 1 and Alloy 2 prepared and processed according to the process of Figure 1B, and Alloy 4 prepared and processed according to the process of Figure 1C, all three of which were subjected to the VDA 238-100 three-point bend test. Prior to bend testing, Alloy 1, Alloy 2, and Alloy 4 were subjected to a 15 % strain in the transverse direction. The first histogram bar represents Alloy 1 processed with batch annealing ("Alloy 1 BA"), the second histogram bar represents Alloy 2 processed with batch annealing ("Alloy 2 BA"), and the third histogram bar represents Alloy 4 processed according to the coil cooling method ("Alloy 4 CC"). As shown in the graph, Alloy 1 and Alloy 2, having significantly different Fe content, exhibited similar bendability. Also, Alloy 1 and Alloy 2 exhibited greater bendability than Alloy 4.

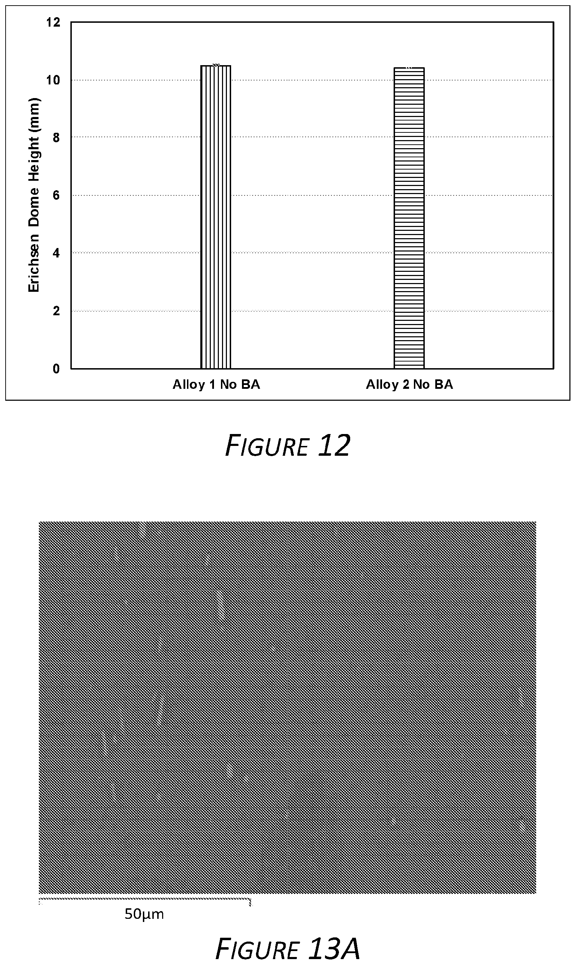

Figure 12 is a graph showing the deep drawability of Alloy 1 and Alloy 2 subjected to an Erichsen cupping test (DIN EN ISO 20482). As shown in the graph, Alloy 1 and Alloy 2, having a significantly different Fe content, exhibited similar drawability. An increase in Fe content can adversely affect formability (e.g., bending); however, due to added Cr, Fe-containing intermetallic particles exhibited a lower aspect ratio and reduced average equivalent circular diameter, providing excellent drawability.

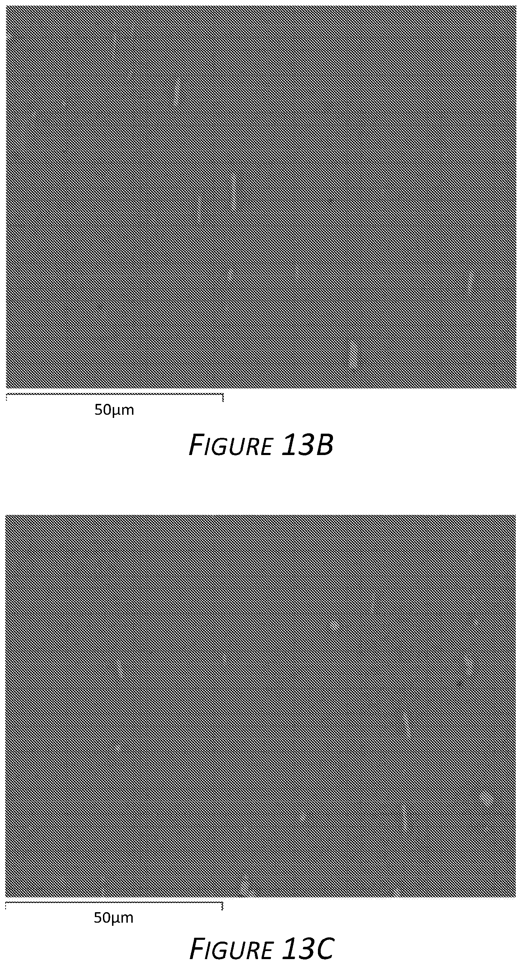

Figure 13A is a SEM micrograph showing that Alloy 1 processed according to the process of Figure 1A, as described herein, results in iron-containing (Fe-containing) intermetallic particles having the desired shape and distribution. As shown in the micrograph, the aluminum alloy product as described herein had few β - AlFeSi intermetallic particles and displayed spherical Fe-containing intermetallic particles, including α - AlFe(Mn,Cr)Si intermetallic particles. Figure 13B is a SEM micrograph showing that Alloy 2 processed according to the process of Figure 1A results in iron-containing (Fe-containing) intermetallic particles having an increased amount of the needle-like shaped β - AlFeSi intermetallic particles. Alloy 2 provided an aluminum alloy product having an amount of β - AlFeSi intermetallic particles that is detrimental to the forming properties of the aluminum alloy.

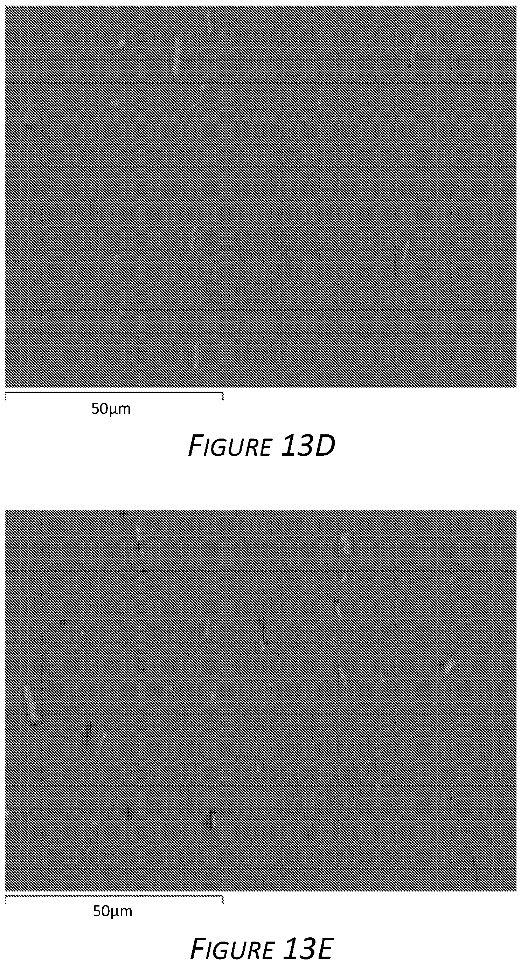

Figure 13C is a SEM micrograph showing that Alloy 1 processed according to the process of Figure 1B, as described herein, resulted in smaller iron-containing (Fe-containing) intermetallic particles compared to Alloy 1 processed according to the process of Figure 1A (see Figure 13A). Figure 13D is a SEM micrograph showing that Alloy 2 processed according to the process of Figure 1B also resulted in smaller iron-containing (Fe-containing) intermetallic particles compared to Alloy 2 processed according to the process of Figure 1B (see Figure 13B). Figure 13E is a SEM micrograph showing that Alloy 3 processed according to the process of Figure 1C exhibited more and larger Fe-containing intermetallic particles.

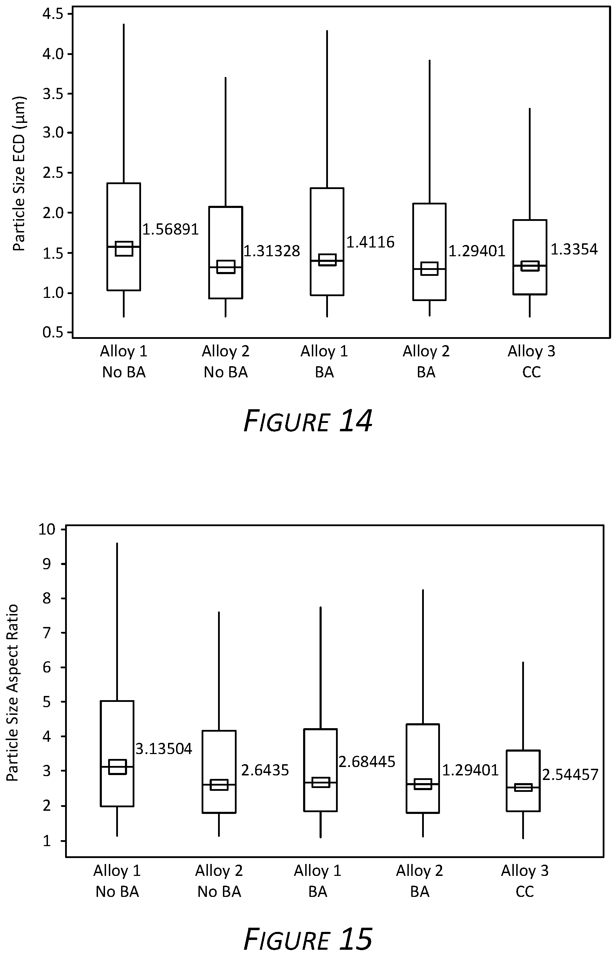

Figures 14 and 15 are graphs showing Fe-containing intermetallic particle size distribution and aspect ratio, respectively. As shown in Figure 14, Alloy 1 and Alloy 2 exhibited similar Fe-containing intermetallic particle average size and size distribution. In Figure 15, Alloy 1 and Alloy 2 exhibited similar Fe-containing intermetallic particle aspect ratio. By adding Cr, Fe-containing intermetallic particles exhibited a lower aspect ratio and reduced average equivalent circular diameter by forming α - AlFe(Mn,Cr)Si intermetallic particles during processing. Alloy 3 exhibited smaller particle sizes and aspect ratios than Alloy 1 and Alloy 2, attributed to the lower Si content (e.g., 0.79 wt. % Si).

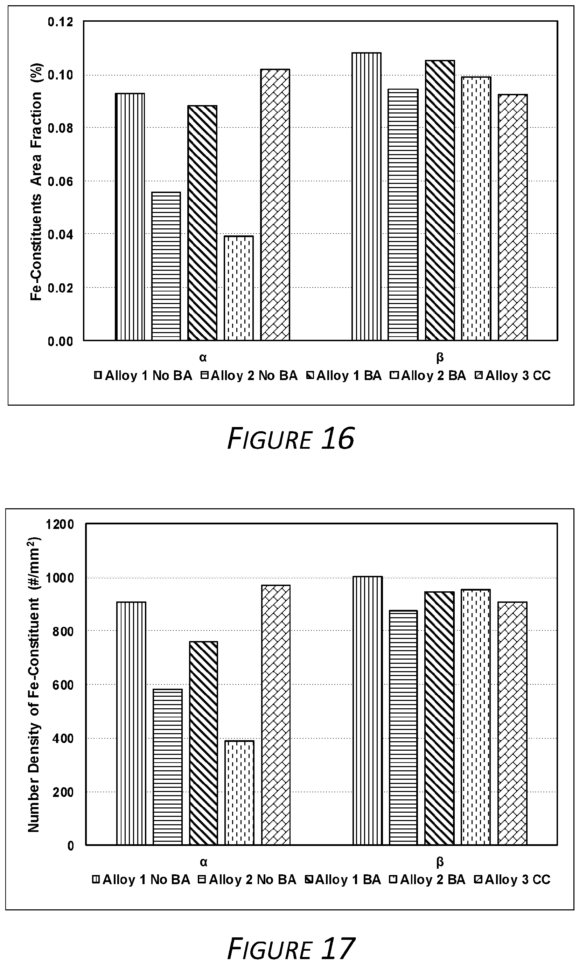

Figures 16 and 17 are graphs showing the Fe-containing intermetallic particle concentration distribution of β - AlFeSi intermetallic particles (labelled as "β") and α-AlFe(Mn,Cr)Si intermetallic particles (labelled as "α"). In Figures 16 and 17, the first histogram bar for each set represents Alloy 1 processed without batch annealing ("Alloy 1 No BA"), the second histogram bar for each set represents Alloy 2 processed without batch annealing ("Alloy 2 No BA"), the third histogram bar for each set represents Alloy 1 processed with batch annealing ("Alloy 1 BA"), the fourth histogram bar for each set represents Alloy 2 processed with batch annealing ("Alloy 2 BA"), and the fifth histogram bar for each set represents Alloy 3 processed according to the coil cooling method ("Alloy 3 CC"). As shown in Figure 16, Alloy 1 exhibited a greater volume fraction of α - AlFe(Mn,Cr)Si intermetallic particles compared to Alloy 2. Similarly, as shown in Figure 17, Alloy 1 exhibited a greater number density of α - AlFe(Mn,Cr)Si intermetallic particles compared to Alloy 2. By adding Cr, Fe-containing intermetallic particles exhibited a greater formation of α - AlFe(Mn,Cr)Si intermetallic particles than β - AlFeSi intermetallic particles during processing. Additionally, Alloy 3 exhibited a smaller area fraction and number density of Fe-containing intermetallic particles than Alloy 1.

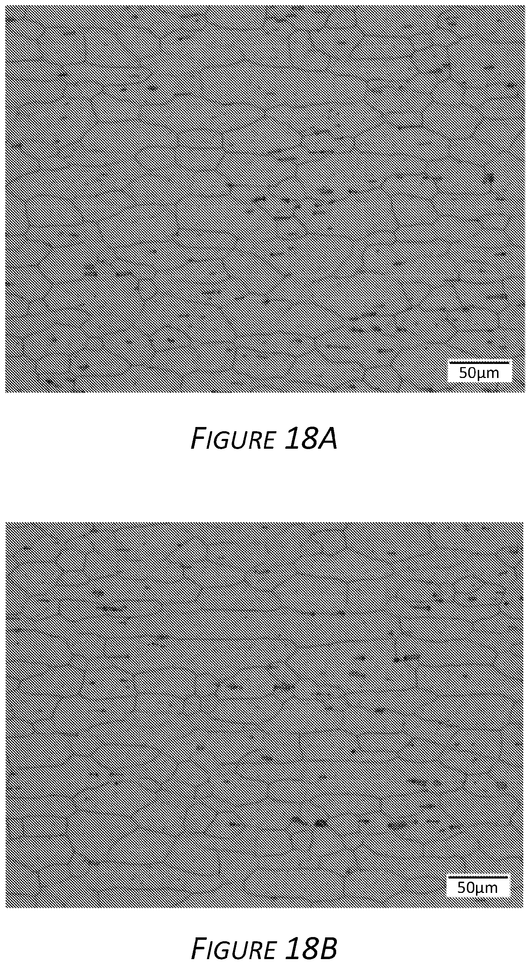

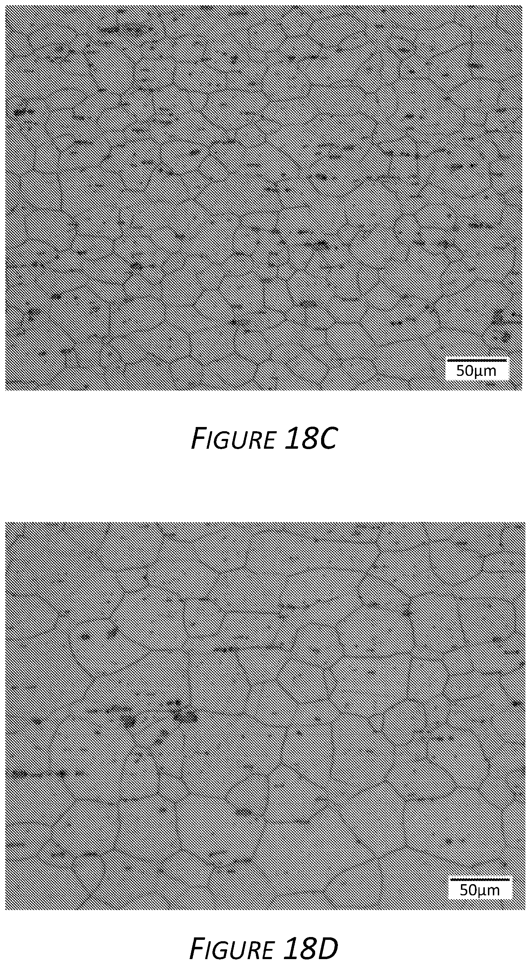

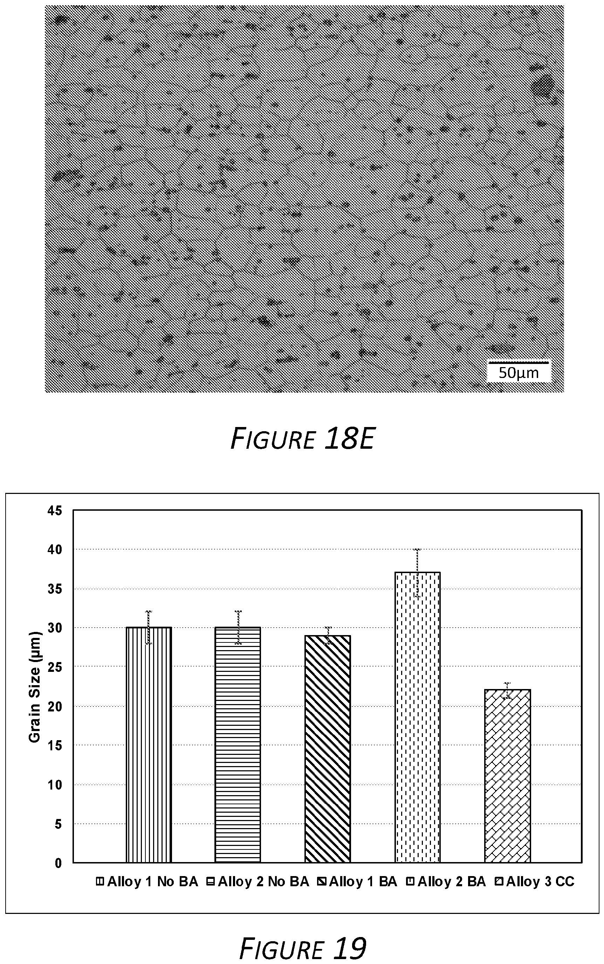

Figure 18A is an OM micrograph showing that Alloy 1 processed according to the process of Figure 1A, as described herein, results in an elongated grain structure. Figure 18B is an OM micrograph showing that Alloy 2 processed according to the process of Figure 1A results in an elongated grain structure. Figure 18C is an OM micrograph showing that Alloy 1 processed according to the process of Figure 1B, as described herein, results in an equiaxed grain structure. Figure 18D is an OM micrograph showing that Alloy 2 processed according to the process of Figure 1B also results in an equiaxed grain structure. Figure 18E is an OM micrograph showing that Alloy 3 processed according to the process of Figure 1C exhibited a finer, equiaxed grain structure.

Figure 19 is a graph showing grain size distribution in Alloy 1 and Alloy 2, both processed with (Figure 1B) and without (Figure 1A) a batch inter-annealing step, as well as Alloy 3 processed with a coil cooling step (Figure 1C). In Figure 19, the first histogram bar represents Alloy 1 processed without batch annealing ("Alloy 1 No BA"), the second histogram bar represents Alloy 2 processed without batch annealing ("Alloy 2 No BA"), the third histogram bar represents Alloy 1 processed with batch annealing ("Alloy 1 BA"), the fourth histogram bar represents Alloy 2 processed with batch annealing ("Alloy 2 BA"), and the fifth histogram bar represents Alloy 3 processed according to the coil cooling method ("Alloy 3 CC"). As shown in Figure 19, the average grain size in Alloy 1 was from about 28 - 32 µm, regardless of the processing route. Alloy 2 exhibited a larger grain size when subjected to the batch inter-annealing step. Alloy 3 exhibited a smaller as compared to Alloy 1 and Alloy 2.

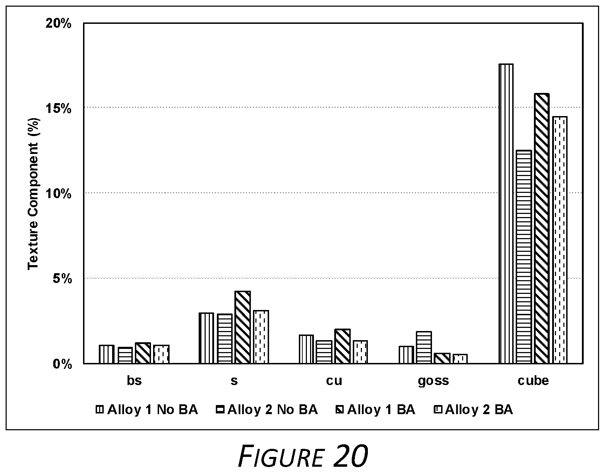

Figure 20 is a graph showing the distribution of texture components in Alloy 1 and Alloy 2 processed with and without a batch inter-annealing step. The texture components included Brass ("bs"), S ("s"), Copper ("cu"), Goss, and Cube. In Figure 20, the first histogram bar for each set represents Alloy 1 processed without batch annealing ("Alloy 1 No BA"), the second histogram bar for each set represents Alloy 2 processed without batch annealing ("Alloy 2 No BA"), the third histogram bar for each set represents Alloy 1 processed with batch annealing ("Alloy 1 BA"), and the fourth histogram bar for each set represents Alloy 2 processed with batch annealing ("Alloy 2 BA"). Alloy 1 exhibited a greater amount of the cube textural component (e.g., 16 - 18 %) as compared to Alloy 2 (e.g., 13 - 15 %). Samples processed without the batch inter-annealing step exhibited a greater amount of the Goss textural component as compared to samples processed including the batch inter-annealing step.

Various embodiments of the invention have been described in fulfillment of the various objectives of the invention. It should be recognized that these embodiments are merely illustrative of the principles of the present invention. Numerous modifications and adaptions thereof will be readily apparent to those skilled in the art without departing from the scope of the present invention as defined in the following claims.

## Claims

1. An aluminum alloy, comprising 0.7 to 1.4 wt. % Si, 0.2 to 0.3 wt. % Fe, up to 0.2 wt. % Cu, up to 0.4 wt. % Mg, 0.02 to 0.08 wt. % Mn, 0.02 to 0.05 wt. % Cr, 0.01 to 0.12 wt. % Sr, up to 0.1 wt. % Ti, up to 0.1 wt.% Zn, up to 0.15 wt. % impurities, remainder Al.

2. The aluminum alloy of claim 1, comprising 1.0 to 1.4 wt. % Si, 0.22 to 0.28 wt. % Fe, up to 0.15 wt. % Cu, up to 0.35 wt. % Mg, 0.02 to 0.06 wt. % Mn, 0.02 to 0.04 wt. % Cr, 0.02 to 0.10 wt. % Sr, up to 0.1 wt. % Ti, up to 0.1 wt.% Zn, up to 0.15 wt. % impurities, remainder Al.

3. The aluminum alloy of any one of claims 1-2, wherein a combined content of Fe and Cr is from 0.22 wt. % to 0.5 wt. %.

4. An aluminum alloy product, comprising the aluminum alloy according to any one of claims 1-3.

5. The aluminum alloy product of claim 4, wherein the aluminum alloy product comprises a grain size of up to 35 µm and in particular wherein the grain size is from 25 µm to 35 µm.

6. The aluminum alloy product of any one of claims 4-5, comprising iron-containing intermetallic particles.

7. The aluminum alloy product of claim 6, wherein at least 36 % of the iron-containing intermetallic particles are spherical.

8. The aluminum alloy product of claim 6 or 7, wherein at least 36 % of the iron-containing intermetallic particles present in the aluminum alloy product have an equivalent circular diameter of 3 µm or less and/or
wherein at least 50 % of the iron-containing intermetallic particles present in the aluminum alloy product have an equivalent circular diameter of 3 µm or less and/or
wherein at least 75 % of the iron-containing intermetallic particles present in the aluminum alloy product have an equivalent circular diameter of 3 µm or less.

9. The aluminum alloy product of any one of claims 6-8, wherein at least 36 % of the iron-containing intermetallic particles comprise α - AlFe(Mn,Cr)Si intermetallic particles and/or
wherein at least 50 % of the iron-containing intermetallic particles comprise α-AlFe(Mn,Cr)Si intermetallic particles and/or
wherein at least 80 % of the iron-containing intermetallic particles comprise α-AlFe(Mn,Cr)Si intermetallic particles.

10. The aluminum alloy product of any one of claims 6-9, wherein a volume fraction of a cube textural component in the aluminum alloy product comprises at least 12 %.

11. The aluminum alloy product of any one of claims 6-10, wherein the aluminum alloy product comprises a total elongation of at least 32 %.

12. The aluminum alloy product of any one of claims 6-11, wherein the aluminum alloy product comprises an automobile body part.

13. A method of producing an aluminum alloy product, comprising:
casting the aluminum alloy of any one of claims 1-3 to produce a cast aluminum alloy article;
homogenizing the cast aluminum alloy article to produce a homogenized cast aluminum alloy article;
hot rolling and cold rolling the homogenized cast aluminum alloy article to produce a final gauge aluminum alloy product, wherein an inter-annealing step is performed during cold rolling; and
solution heat treating the final gauge aluminum alloy product.

14. The method of claim 13, wherein the homogenizing is performed at a homogenization temperature of from 530 °C to 570 °C

## Patentansprüche

1. Aluminiumlegierung, umfassend 0,7 bis 1,4 Gew.-% Si, 0,2 bis 0,3 Gew.-% Fe, bis zu 0,2 Gew.-% Cu, bis zu 0,4 Gew.-% Mg, 0,02 bis 0,08 Gew.-% Mn, 0,02 bis 0,05 Gew.-% Cr, 0,01 bis 0,12 Gew.-% Sr, bis zu 0,1 Gew.-% Ti, bis zu 0,1 Gew.-% Zn, bis zu 0,15 Gew.-% Verunreinigungen, Rest Al.

2. Aluminiumlegierung nach Anspruch 1, umfassend 1,0 bis 1,4 Gew.-% Si, 0,22 bis 0,28 Gew.-% Fe, bis zu 0,15 Gew.-% Cu, bis zu 0,35 Gew.-% Mg, 0,02 bis 0,06 Gew.-% Mn, 0,02 bis 0,04 Gew.-% Cr, 0,02 bis 0,10 Gew.-% Sr, bis zu 0,1 Gew.-% Ti, bis zu 0,1 Gew.-% Zn, bis zu 0,15 Gew.-% Verunreinigungen, Rest Al.

3. Aluminiumlegierung nach einem der Ansprüche 1-2, wobei ein Gesamtgehalt von Fe und Cr von 0,22 Gew.-% bis 0,5 Gew.-% beträgt.

4. Aluminiumlegierungsprodukt, umfassend die Aluminiumlegierung nach einem der Ansprüche 1-3.

5. Aluminiumlegierungsprodukt nach Anspruch 4, wobei das Aluminiumlegierungsprodukt eine Korngröße von bis zu 35 µm umfasst und insbesondere wobei die Korngröße 25 µm bis 35 µm beträgt.

6. Aluminiumlegierungsprodukt nach einem der Ansprüche 4-5, umfassend eisenhaltige intermetallische Partikel.

7. Aluminiumlegierungsprodukt nach Anspruch 6, wobei wenigstens 36 % der eisenhaltigen intermetallischen Partikel sphärisch sind.

8. Aluminiumlegierungsprodukt nach Anspruch 6 oder 7, wobei wenigstens 36 % der eisenhaltigen intermetallischen Partikel, welche in dem Aluminiumlegierungsprodukt vorhanden sind, einen äquivalenten Kreisdurchmesser von 3 µm oder weniger aufweisen, und/oder
wobei wenigstens 50 % der eisenhaltigen intermetallischen Partikel, welche in dem Aluminiumlegierungsprodukt vorhanden sind, einen äquivalenten Kreisdurchmesser von 3 µm oder weniger aufweisen, und/oder
wobei wenigstens 75 % der eisenhaltigen intermetallischen Partikel, welche in dem Aluminiumlegierungsprodukt vorhanden sind, einen äquivalenten Kreisdurchmesser von 3 µm oder weniger aufweisen.

9. Aluminiumlegierungsprodukt nach einem der Ansprüche 6-8, wobei wenigstens 36 % der eisenhaltigen intermetallischen Partikel α - AlFe(Mn, Cr)Si intermetallische Partikel umfassen, und/oder
wobei wenigstens 50 % der eisenhaltigen intermetallischen Partikel α-AlFe(Mn, Cr)Si intermetallische Partikel umfassen, und/oder
wobei wenigstens 80 % der eisenhaltigen intermetallischen Partikel α-AlFe(Mn, Cr)Si intermetallische Partikel umfassen.

10. Aluminiumlegierungsprodukt nach einem der Ansprüche 6-9, wobei ein Volumenanteil einer Komponente mit kubischer Textur in dem Aluminiumlegierungsprodukt wenigstens 12 % umfasst.

11. Aluminiumlegierungsprodukt nach einem der Ansprüche 6-10, wobei das Aluminiumlegierungsprodukt eine Gesamtdehnung von wenigstens 32 % umfasst.

12. Aluminiumlegierungsprodukt nach einem der Ansprüche 6-11, wobei das Aluminiumlegierungsprodukt ein Kraftfahrzeugkarosserieteil umfasst.

13. Verfahren zur Herstellung eines Aluminiumlegierungsproduktes, umfassend:
Gießen der Aluminiumlegierung gemäß einem der Ansprüche 1-3, um ein Aluminiumlegierung-Gußstück herzustellen;
Homogenisieren des Aluminiumlegierung-Gußstückes, um ein homogenisiertes Aluminiumlegierung-Gußstück herzustellen;
Heißwalzen und Kaltwalzen des homogenisierten Aluminiumlegierung-Gußstückes, um ein Aluminiumlegierungsprodukt mit Enddicke herzustellen, wobei ein Zwischenglühschritt während des Kaltwalzens durchgeführt wird; und
Lösungsglühen des Aluminiumlegierungsproduktes mit Enddicke.

14. Verfahren nach Anspruch 13, wobei das Homogenisieren bei einer Homogenisierungstemperatur von 530 °C bis 570 °C durchgeführt wird.

## Revendications

1. Alliage d'aluminium, comprenant de 0,7 à 1,4 % en poids de Si, de 0,2 à 0,3 % en poids de Fe, jusqu'à 0,2 % en poids de Cu, jusqu'à 0,4 % en poids de Mg, de 0,02 à 0,08 % en poids de Mn, de 0,02 à 0,05 % en poids de Cr, de 0,01 à 0,12 % en poids de Sr, jusqu'à 0,1 % en poids de Ti, jusqu'à 0,1 % en poids de Zn, jusqu'à 0,15 % en poids d'impuretés, le reste étant de l'Al.

2. Alliage d'aluminium selon la revendication 1, comprenant de 1,0 à 1,4 % en poids de Si, de 0,22 à 0,28 % en poids de Fe, jusqu'à 0,15 % en poids de Cu, jusqu'à 0,35 % en poids de Mg, de 0,02 à 0,06 % en poids de Mn, de 0,02 à 0,04 % en poids de Cr, de 0,02 à 0,10 % en poids de Sr, jusqu'à 0,1 % en poids de Ti, jusqu'à 0,1 % en poids de Zn, jusqu'à 0,15 % en poids d'impuretés, le reste étant de l'Al.

3. Alliage d'aluminium selon l'une ou l'autre des revendications 1 et 2, dans lequel une teneur combinée en Fe et en Cr va de 0,22 % en poids à 0,5 % en poids.

4. Produit d'alliage d'aluminium, comprenant l'alliage d'aluminium selon l'une quelconque des revendications 1 à 3.

5. Produit d'alliage d'aluminium selon la revendication 4, dans lequel le produit d'alliage d'aluminium a un taille de grain allant jusqu'à 35 µm et en particulier dans lequel la taille de grain va de 25 µm à 35 µm.

6. Produit d'alliage d'aluminium selon l'une ou l'autre des revendications 4 et 5, comprenant des particules intermétalliques contenant du fer.

7. Produit d'alliage d'aluminium selon la revendication 6, dans lequel au moins 36 % des particules intermétalliques contenant du fer sont sphériques.

8. Produit d'alliage d'aluminium selon la revendication 6 ou 7, dans lequel au moins 36 % des particules intermétalliques contenant du fer présentes dans le produit d'alliage d'aluminium ont un diamètre de cercle équivalent inférieur ou égal à 3 µm et/ou
dans lequel au moins 50 % des particules intermétalliques contenant du fer présentes dans le produit d'alliage d'aluminium ont un diamètre de cercle équivalent inférieur ou égal à 3 µm et/ou
dans lequel au moins 75 % des particules intermétalliques contenant du fer présentes dans le produit d'alliage d'aluminium ont un diamètre de cercle équivalent inférieur ou égal à 3 µm.

9. Produit d'alliage d'aluminium selon l'une quelconque des revendications 6 à 8, dans lequel au moins 36 % des particules intermétalliques contenant du fer comprennent des particules intermétalliques de α - AlFe(Mn, Cr)Si et/ou
dans lequel au moins 50 % des particules intermétalliques contenant du fer comprennent des particules intermétalliques de α - AlFe(Mn, Cr)Si et/ou
dans lequel au moins 80 % des particules intermétalliques contenant du fer comprennent des particules intermétalliques de α - AlFe(Mn, Cr)Si.

10. Produit d'alliage d'aluminium selon l'une quelconque des revendications 6 à 9, dans lequel une fraction volumique d'un constituant textural cubique du produit d'alliage d'aluminium constitue au moins 12 %.

11. Produit d'alliage d'aluminium selon l'une quelconque des revendications 6 à 10, dans lequel le produit d'alliage d'aluminium a un allongement total d'au moins 32 %.

12. Produit d'alliage d'aluminium selon l'une quelconque des revendications 6 à 11, dans lequel le produit d'alliage d'aluminium constitue une pièce de carrosserie d'automobile.

13. Procédé de production d'un produit d'alliage d'aluminium, comprenant les étapes consistant à :
couler l'alliage d'aluminium selon l'une quelconque des revendications 1 à 3 pour produire un article d'alliage d'aluminium coulé ;
homogénéiser l'article d'alliage d'aluminium coulé pour produire un article d'alliage d'aluminium coulé homogénéisé ;
laminer à chaud et laminer à froid l'article d'alliage d'aluminium coulé homogénéisé pour produire un produit d'alliage d'aluminium d'épaisseur finale, dans lequel une étape de recuit intermédiaire est mise en œuvre pendant le laminage à froid ; et
effectuer un traitement thermique de mise en solution du produit d'alliage d'aluminium d'épaisseur finale.

14. Procédé selon la revendication 13, dans lequel l'étape d'homogénéisation est effectuée à une température d'homogénéisation comprise entre 530 °C et 570 °C.
